(19) Europäisches Patentamt / European Patent Office / Office européen des brevets

(11) **EP 1 767 923 A2**

(12) **EUROPEAN PATENT APPLICATION**
published in accordance with Art. 158(3) EPC

(43) Date of publication:
**28.03.2007 Bulletin 2007/13**

(51) Int Cl.:
**G01N 21/27** (2006.01)   **G01N 21/35** (2006.01)
**G01N 21/17** (2006.01)   **G06T 3/00** (2006.01)

(21) Application number: **05752944.8**

(22) Date of filing: **27.06.2005**

(86) International application number:
**PCT/JP2005/011772**

(87) International publication number:
**WO 2006/003867 (12.01.2006 Gazette 2006/02)**

(84) Designated Contracting States:
**DE FR GB**

(30) Priority: **30.06.2004   JP 2004193288**
**30.06.2004   JP 2004193380**
**09.07.2004   JP 2004203683**
**09.07.2004   JP 2004203684**

(71) Applicant: **NIKON CORPORATION**
**Tokyo 100-8831 (JP)**

(72) Inventor: **OOKI, Hiroshi,**
**C/O NIKON CORPORATION**
**Chiyoda-ku,**
**Tokyo 1008331 (JP)**

(74) Representative: **Whitlock, Holly Elizabeth Ann et al**
**R G C Jenkins,**
**26 Caxton Street**
**London SW1H 0RJ (GB)**

(54) **MICROSCOPE OBSERVATION METHOD, MICROSCOPE, DIFFERENTIATION INTERFERENCE MICROSCOPE, PHASE DIFFERENCE MICROSCOPE, INTERFERENCE MICROSCOPE, IMAGE PROCESSING METHOD, AND IMAGE PROCESSING DEVICE**

(57)   A special image such as a super-resolution image is obtainable without a microscope of a specialized configuration. A microscope observation method includes: a measurement step for changing the illumination angle of an object (1) and measuring the complex amplitude distribution of each lightwave generated separately on the image surface (15) by each light flux emitted from the object (1) at respective illumination angle values; a calculation step for calculating, according to the data on the complex amplitude distribution of each lightwave, the complex amplitude distribution of the virtual lightwave generated on the image surface when the optical imaging system (14) is replaced by an optical virtual-imaging system (L') having a greater numerical aperture; and an image generation step for generating image data of the virtual image formed on the image surface by the optical virtual-imaging system (L') according to the complex amplitude distribution of the virtual lightwave.

Fig. 1

EP 1 767 923 A2

**Description**

## *TECHNICAL FIELD*

The present invention relates to a microscopic observation method for observing an object such as an industrial component of semiconductor or the like, a living organism such as cells of a living matter, or the like. Further, the present invention relates to a microscope apparatus, a differential interference microscope apparatus, a phase-contrast microscope apparatus, and an interference microscope apparatus. Further, the present invention relates to an image processing method and an image processing apparatus which are applied to the microscope apparatus.

## *BACKGROUND ART*

To improve resolution of an optical microscope (which is simply referred to as "microscope" herein), it is necessary to increase the numerical aperture of an objective lens thereof, or to shorten the wavelength of a light source thereof (refer to Non-patent document 1, and the like).
Further, in a general differential interference microscope, a dedicated interference apparatus is incorporated. A dedicated interference apparatus for a differential interference microscope is made by combining a polarizing prism such as Wollaston prism or Nomarski prism and a polarizer and an analyzer arranged in a cross-Nicol state (for example, refer to Non-patent document 2). In this differential interference microscope, an object is lighted via the polarizer and the polarizing prism, and light from the object is taken in via the polarizing prism and the analyzer, thereby obtaining a differential interference image of an object.

Further, in a general phase-contrast microscope, a phase plate is arranged on a pupil plane of an optical imaging system (for example, refer to Non-patent documents 3, 4). This phase plate is arranged in combination with an aperture stop (in a ring shape or a dot shape) of an illumination optical system, and a part thereon that is conjugated with the aperture stop (namely, a part where the direct light from an object passes through) is a phase shift area. In this phase-contrast microscope, a direct light from the object is taken in via the phase shift area provided on the phase plate, and also a diffraction beam from the object is taken in via the other area (non-shift area) on the phase plate, thereby obtaining a phase-contrast image of the object by interference of the both.

Further, in a general interference microscope (Mirau interference microscope or the like; refer to Non-patent document 5 or the like), a semi-transparent mirror is arranged in the middle between an objective lens and an object, and a reflector is arranged between the objective lens and the semi-transparent mirror. In this Mirau interference microscope, a luminous flux (observational luminous flux) passing through the objective lens, the semi-transparent mirror, the object, the semi-transparent mirror, and the objective lens in order and a luminous flux (reference luminous flux) passing through the objective lens, the semi-transparent mirror, the reflector, the semi-transparent mirror, and the objective lens in order interfere to form an interference image. Since the light source for this interference microscope is a white light source and the optical path length of the observational luminous flux and the optical path length of the reference luminous flux are strictly matched in advance in a state that there is no object, an interference pattern occurs only at a point where both the optical path lengths match on the interference image, and a change of specific color appears in the vicinity of this point. Therefore, a distribution of elements in the object is expressed by a distribution of colors.

Non-patent document 1: Hiroshi Komatsu, "Kougaku kenbikyou no kiso to ouyou (Fundamentals and application of optical microscopy) (1)", Oyo Buturi (Applied Physics), vol. 60, No. 8, pp. 816-817, 1991
Non-patent document 2: Hiroshi Komatsu, "Kougaku kenbikyou no kiso to ouyou (Fundamentals and application of optical microscopy) (2)", Oyo Buturi (Applied Physics), vol. 60, No. 9, pp. 924-928, 1991
Non-patent document 3: Hiroshi Komatsu, "Kougaku kenbikyou no kiso to ouyou (Fundamentals and application of optical microscopy) (3)", Oyo Buturi (Applied Physics), vol. 60, No. 19, pp. 1032-1034, 1991
Non-patent document 4: Hiroshi Komatsu, "Kougaku kenbikyou no kiso to ouyou (Fundamentals and application of optical microscopy) (4)", Oyo Buturi (Applied Physics), vol. 60, No. 11, pp. 1136-1138, 1991
Non-patent document 5: Hiroshi Komatsu, "Kougaku kenbikyou no kiso to ouyou (Fundamentals and application of optical microscopy) (4)", Oyo Buturi (Applied Physics), vol. 60, No. 11, pp. 1139-1140, 1991

## *DISCLOSURE OF THE INVENTION*

### *Problems to be Solved by the Invention*

However, when it is attempted to obtain a high-resolution image by a microscope, the resolution of a microscope is limited inherently in each of microscopes in respective fields because the type of used light source is limited depending on the type of object and the purpose of observation and also materials for the optical system may often be limited depending on the used light source.

Also, to obtain particular images, such as differential interference image, phase-contrast image, and interference image of an object, dedicated optical systems as described above are needed respectively. Without a dedicated optical system, the structure is the same as an ordinary optical microscope, which can only obtain a bright-field image of an object. Since the bright-field image includes no phase information, it is not possible to estimate a particular image from the bright-field image.

Accordingly, an object of the present invention is to obtain particular images such as super-resolution image (image having a resolution exceeding the resolution of a microscope), differential interference image, phase-contrast image, and interference image without a microscope of a specialized structure.

Specifically, an object of the present invention is to provide a microscopic observation method, a microscope apparatus, and an image processing apparatus which can obtain a high resolution that exceeds performance of the optical imaging system of a microscope.

Further, an object of the present invention is to provide an image processing apparatus, a differential interference microscope apparatus, and an image processing method which can obtain a differential interference image of an object without using a dedicated optical system.

Further, an object of the present invention is to provide an image processing apparatus, a phase-contrast microscope apparatus, and an image processing method which can obtain a phase-contrast image of an object without using a dedicated optical system.

Further, an object of the present invention is to provide a microscopic observation method, an interference microscope apparatus, and an image processing apparatus which can obtain a phase-contrast image of an object without using a dedicated optical system.

*Means for Solving the Problems*

A microscopic observation method of the present invention uses a microscope apparatus having an optical imaging system which images a luminous flux radiated from a lighted object and is capable of measuring a distribution of complex amplitude of a lightwave generated on an image surface of the optical imaging system. The method includes a measuring step of changing a lighting angle for the object and measuring distributions of complex amplitude of respective lightwaves which are generated separately on the image surface by respective luminous fluxes radiated from the object at respective lighting angles; a calculating step of calculating, based on data of the distributions of complex amplitude of the respective lightwaves, a distribution of complex amplitude of a virtual lightwave generated on an image surface thereof when the optical imaging system is replaced by an optical virtual-imaging system having a larger numerical aperture; and an imaging step of generating, based on the distribution of complex amplitude of the virtual lightwave, image data of a virtual image of the object formed by the optical virtual-imaging system on the image surface thereof.

Moreover, the calculating step can include spatially Fourier transforming the distributions of complex amplitude of the respective lightwaves to calculate distributions of complex amplitude of respective lightwaves which are generated separately on a pupil of the optical imaging system by the respective luminous fluxes; laterally staggering and combining the distributions of complex amplitude of the respective lightwaves to calculate a distribution of complex amplitude of a virtual lightwave generated on the pupil of the optical virtual-imaging system; and spatially inverse Fourier transforming the distribution of complex amplitude of the virtual lightwave to calculate a distribution of complex amplitude of a virtual lightwave generated on the image surface of the optical virtual-imaging system.

Further, the calculating step can correct a phase offset and/or an amplitude offset due to dispersion between respective lightwaves from the distributions of complex amplitude of the respective lightwaves upon the combining.

Further, the calculating step uses data with a phase component corrected as the data of the distributions of complex amplitude of the respective lightwaves. The phase component is superimposed in common on each of the respective lightwaves by a single body of the optical imaging system.

Further, the microscope apparatus can include a lighting unit which lights the object by a pulsed light; the optical imaging system which images a luminous flux radiated from the object; a detecting unit which detects a distribution of electrical field strength of a lightwave generated on the image surface of the optical imaging system; and a control unit which controls emission timing for the pulsed light and timing for the detecting, to detect a change over time in the distribution of strength in one emission period, and calculates a distribution of complex amplitude of a lightwave generated on the image surface based on data of the change over time.

Preferably, the pulsed light is a pulsed light in a terahertz frequency range.

Further, a microscope apparatus of the present invention includes a lighting unit which lights an object by a pulsed light; the aforementioned optical imaging system which images a luminous flux radiated from the object; a detecting unit which detects a distribution of electrical field strength of a lightwave generated on an image surface of the optical imaging system; a control unit which controls emission timing for the pulsed light and timing for the detecting, to detect a change over time in the distribution of strength in one emission period, and calculates a distribution of complex amplitude of a lightwave generated on the image surface based on data of the change over time; and a changing unit which changes a lighting angle for the object. The control unit measures distributions of complex amplitude of respective lightwaves which are generated separately on the image surface by respective luminous fluxes radiated from the object at respective lighting angles.

Preferably, the pulsed light is a pulsed light in a terahertz frequency range.

Further, the control unit can execute a calculating step of calculating, based on data of the distributions of complex amplitude of the respective lightwaves, a distribution of complex amplitude of a virtual lightwave generated on an image surface thereof when the optical imaging system is replaced by an optical virtual-imaging system having a larger numerical aperture; and an imaging step of generating, based on the distribution of complex amplitude of the virtual lightwave, image data of a virtual image of the object formed by the optical virtual-imaging system on the image surface thereof.

Further, in the calculating step, the control unit can spatially Fourier transform the distributions of complex amplitude of the respective lightwaves to calculate distributions of complex amplitude of respective lightwaves which are generated separately on a pupil of the optical imaging system by the respective luminous fluxes; laterally stagger and combine the distributions of complex amplitude of the respective lightwaves to calculate a distribution of complex amplitude of a virtual lightwave generated on the pupil of the optical virtual-imaging system; and spatially inverse Fourier transform the distribution of complex amplitude of the virtual lightwave to calculate a distribution of complex amplitude of a virtual lightwave generated on the image surface of the optical virtual-imaging system.

Further, in the calculating step, upon the combining the control unit can correct a phase offset and/or an amplitude offset due to dispersion between respective lightwaves from the distributions of complex amplitude of the respective lightwaves.

Further, in the calculating step, the control unit can use data with a phase component corrected as the data of the distributions of complex amplitude of the respective lightwaves.

The phase component is superimposed in common on each of the respective lightwaves by a single body of the optical imaging system.

Further, an image processing apparatus of the present invention to be applied to a microscope apparatus includes a calculating unit which calculates, based on data of the distributions of complex amplitude of the respective lightwaves, a distribution of complex amplitude of a virtual lightwave generated on an image surface thereof when the optical imaging system is replaced by an optical virtual-imaging system having a larger numerical aperture; and an imaging unit which generates image data of a virtual image of the object formed by the optical virtual-imaging system on the image surface thereof based on the distribution of complex amplitude of the virtual lightwave.

Moreover, the calculating unit can spatially Fourier transform the distributions of complex amplitude of the respective lightwaves to calculate distributions of complex amplitude of respective lightwaves which are generated separately on a pupil of the optical imaging system by the respective luminous fluxes; laterally stagger and combine the distributions of complex amplitude of the respective lightwaves to calculate a distribution of complex amplitude of a virtual lightwave generated on the pupil of the optical virtual-imaging system; and spatially inverse Fourier transform the distribution of complex amplitude of the virtual lightwave to calculate a distribution of complex amplitude of a virtual lightwave generated on the image surface of the optical virtual-imaging system.

Further, upon the combining the calculating unit can correct a phase offset and /or an amplitude offset due to dispersion between respective lightwaves from the distributions of complex amplitude of the respective lightwaves.

Further, the calculating unit can use data with a phase component corrected as the data of the distributions of complex amplitude of the respective lightwaves. The phase component is superimposed in common on each of the respective lightwaves by a single body of the optical imaging system.

Further, an image processing apparatus of the present invention includes a first processing unit which shifts phases of complex amplitudes of respective pixel data of a first data group by a predetermined amount to generate a second data group, the first data group representing a distribution of complex amplitude of an object image; a second processing unit which obtains a difference or a sum of complex amplitudes of pixel data whose images are at relative positions with a shift by a predetermined amount in a predetermined direction, to thereby generate a third data group from respective pixel data of the first data group and of the second data group; and a third processing unit which generates a fourth data group from respective pixel data of the third data group by obtaining squares of absolute values of complex amplitudes of the pixel data.

Further, a differential interference microscope apparatus of the present invention includes the aforementioned image processing apparatus, and a display unit which displays respective pixel data of the fourth data group.

Further, the differential interference microscope apparatus can further include a lighting unit which lights an object by a pulsed light; an optical imaging system which forms an image of the object based on a pulsed light generated from the object when lighted by the lighting unit; a measuring unit which measures a change over time in electrical field of a pulsed light incident on an image surface of the optical imaging system; and a generation unit which Fourier transforms the change over time in electrical field to generate the first data group for each of wavelength components.

Preferably, the lighting unit lights the object by a pulsed light in a terahertz frequency range.

Further, an image processing method of the present invention includes a first processing step of shifting phases of complex amplitudes of respective pixel data of a first data group by a predetermined amount to generate a second data group, the first data group representing a distribution of complex amplitude of an object image; a second processing step of obtaining a difference or a sum of complex amplitudes of pixel data whose images are at relative positions with a shift by a predetermined amount in a predetermined direction, to thereby generate a third data group from respective pixel data of said first data group and of said second data; and a third processing step of generating a fourth data group from respective pixel data of the third data group by obtaining squares of absolute values of complex amplitudes of the pixel data.

Further, an image processing apparatus of the present invention includes a first processing unit which performs Fourier transform on respective pixel data of a first data group based on a direct light and a diffraction beam from an object to generate a second data group, the first data group representing a distribution of complex amplitude of an object image formed on an image surface of an optical imaging system, the second data group representing a distribution of complex amplitude on a pupil plane of the optical imaging system; a second processing unit which shifts phases of complex amplitudes of certain pixel data of respective pixel data of the second data group by a predetermined amount to generate a third data group, the certain pixel data corresponding to a passing position of the direct light on the pupil plane; a third processing unit which performs inverse Fourier transform on respective pixel data of the third data group to generate a fourth data group representing a distribution of complex amplitude on the image surface; and a fourth processing unit which generates a fifth data group from respective pixel data of the fourth data group by obtaining squares of absolute values of complex amplitudes of the pixel data.

Moreover, while shifting, by the predetermined amount, phases of complex amplitudes of the pixel data corresponding to the passing position of the direct light, the second processing unit can reduce amplitudes of the complex amplitudes to generate the third data group.

Further, a phase-contrast microscope apparatus of the present invention includes the aforementioned image processing apparatus and a display unit which displays respective pixel data of the fifth data group.

Moreover, the phase-contrast microscope apparatus can further include a lighting unit which lights the object by a pulsed light; an optical imaging system which forms the object image based on the direct light in pulsed form and the diffraction beam generated from the object when lighted by the lighting unit; a measuring unit which measures a change over time in electrical field of a pulsed light incident on an image surface of the optical imaging system; and a generation unit which Fourier transforms the change over time in electrical field to generate the first data group for each of wavelength components.

Further, the lighting unit can light the object by a pulsed light in a terahertz frequency range.

Further, an image processing method of the present invention includes a first processing step of performing Fourier transform on respective pixel data of a first data group based on a direct light and a diffraction beam from an object to generate a second data group, the first data group representing a distribution of complex amplitude on a pupil plane of the optical imaging system, the second data group representing a distribution of complex amplitude of an object image formed on an image surface of an optical imaging system; a second processing step of shifting phases of complex amplitudes of certain pixel data of respective pixel data of the second data group by a predetermined amount to generate a third data group, the certain pixel data corresponding to a passing position of the direct light on the pupil plane; a third processing step of performing inverse Fourier transform on respective pixel data of the third data group to generate a fourth data group representing a distribution of complex amplitude on the image surface; and a fourth processing step of generating a fifth data group from respective pixel data of the fourth data group by obtaining squares of absolute values of complex amplitudes of the pixel data.

Further, a microscopic observation method of the present invention uses a microscope apparatus having an optical imaging system which images an observational luminous flux radiated from a lighted object and is capable of measuring a distribution of complex amplitude of an observational lightwave generated on an image surface of the optical imaging system. The method includes an observational data obtaining step of obtaining data of a distribution of complex amplitude of the observational lightwave; a reference data obtaining step of obtaining data of a distribution of complex amplitude of a reference lightwave generated on the image surface when the object is removed from an optical path; and an imaging step of overlapping the data of the distribution of complex amplitude of the observational lightwave with the data of the distribution of complex amplitude of the reference lightwave at the same coordinates and squaring absolute values thereof to generate image data of an interference image of the object.

Moreover, the microscope apparatus can include a lighting unit which lights the object by a pulsed light, the optical imaging system which images an observational luminous flux radiated from the object, a detecting unit which detects a distribution of electrical field strength of an observational lightwave generated on the image surface of the optical imaging system; and a control unit which controls emission timing for the pulsed light and timing for the detecting, to detect a change over time in the distribution of strength in one emission period, and calculates a distribution of complex amplitude of the observational lightwave based on data of the change over time.

Preferably, the pulsed light is a pulsed light in a terahertz frequency range.

Further, The observational data obtaining step can obtain data of distributions of complex amplitude of respective wavelength components of the observational lightwave. The reference data obtaining step can obtain data of distributions of complex amplitude of respective wavelength components of the reference lightwave. The imaging step can perform the overlapping and squaring of absolute values for each of wavelength components to generate spectral image data of the interference image.

Further, in the imaging step, the spectral image data can be converted into data for expressing the interference image in one color image.

Further, an interference microscope apparatus of the present invention includes a lighting unit which lights an object by a pulsed light; an optical imaging system which images an observational luminous flux radiated from the object; a detecting unit which detects a distribution of electrical field strength of an observational lightwave generated on an image surface of the optical imaging system; and a control unit which controls emission timing for the pulsed light and timing for the detecting, to detect a change over time in the distribution of strength in one emission period, and calculates a distribution of complex amplitude of the observational lightwave based on data of the change over time. The control unit obtains data of a distribution of complex amplitude of the observational lightwave and data of a distribution of complex amplitude of a reference lightwave generated on the image surface when the object is removed from an optical path, and overlaps the data of the distribution of complex amplitude of the observational lightwave with the data of the distribution of complex amplitude of the reference lightwave at the same coordinates and squares absolute values thereof to generate image data of an interference image of the object.

Preferably, the pulsed light is a pulsed light in a terahertz frequency range.

Further, the control unit can obtain data of distributions of complex amplitude of respective wavelength components of the reference lightwave and data of distributions of complex amplitude of respective wavelength components of the observational lightwave; and perform the overlapping and squaring of absolute values for each of wavelength components to generate spectral image data of the interference image.

Further, the control unit can convert the spectral image data into data for expressing the interference image in one color image.

Further, an image processing apparatus of the present invention is to be applied to a microscope apparatus having an optical imaging system which images an observational luminous flux radiated from a lighted object and is capable of measuring a distribution of complex amplitude of an observational lightwave generated on an image surface of the optical imaging system. The image processing apparatus includes an observational data obtaining unit which obtains data of a distribution of complex amplitude of the observational lightwave; a reference data obtaining unit which obtains data of a distribution of complex amplitude of a reference lightwave generated on the image surface when the object is removed from an optical path; and an imaging unit which overlaps the data of the distribution of complex amplitude of the observational lightwave with the data of the distribution of complex amplitude of the reference lightwave at the same coordinates and squares absolute values thereof to generate image data of an interference image of the object.

Moreover, the microscope apparatus can include a lighting unit which lights the object by a pulsed light, the optical imaging system which images an observational luminous flux radiated from the object, a detecting unit which detects a distribution of electrical field strength of an observational lightwave generated on the image surface of the optical imaging system, and a control unit which controls emission timing for the pulsed light and timing for the detecting, to detect a change over time in the distribution of strength in one emission period, and calculates a distribution of complex amplitude of the observational lightwave based on data of the change over time.

Preferably, the pulsed light is a pulsed light in a terahertz frequency range.

Further, the observational data obtaining unit can obtain data of distributions of complex amplitude of respective wavelength components of the observational lightwave. The reference data obtaining unit can obtain data of distributions of complex amplitude of respective wavelength components of the reference lightwave. The imaging unit can perform the overlapping and the squaring of absolute values for each of wavelength components to generate spectral image data of the interference image.

Further, the imaging unit can convert the spectral image data into data for expressing the interference image in one color image.

*Effect of the Invention*

According to the present invention, it is possible to obtain a particular image of at least one of a super-resolution image, a differential interference image, a phase-contrast image, and an interference image without a microscope apparatus of a specialized structure.

Specifically, according to the present invention, a high resolution that exceeds performance of the optical imaging system of a microscope is obtainable. Further, according to the present invention, at least one of a differential interference image, a phase-contrast image, and an interference image of an object can be obtainable without using a dedicated optical system.

*BRIEF DESCRIPTION OF THE DRAWINGS*

[Fig. 1 is a structural view of a system of an embodiment for obtaining a super-resolution image;

[Fig. 2] is a flowchart of this observation method;

[Figs. 3] are views showing an appearance at a lighting angle $\theta_0$ and data obtained in this state;

[Figs. 4] are views showing respective appearances at the lighting angles $\theta_1$, $\theta_2$ and data obtained in this state;

[Figs. 5] are views explaining differences in luminous fluxes contributing to imaging and differences in diffraction pattern on a pupil P when the lighting angle $\theta$ is set to $\theta_0$, $\theta_1$, $\theta_2$;

[Fig. 6] is a view showing a correspondence between a virtual lightwave L' generated on a pupil P' of an optical virtual-imaging system 14' and respective lightwaves $L_0$, $L_1$, $L_2$, ..., $L_8$ generated on the pupil P of an optical imaging system 14;

[Fig. 7] is a view showing a concept (by coordinates on the pupil P) of a distribution of complex amplitude Bo(i, j);

[Figs. 8] are views showing a concept (by coordinates on the pupil P) of a distribution of complex amplitude $B_1$(i, j) and an appearance of lateral staggering;

[Figs. 9] are views showing a concept (by coordinates on the pupil P) of a distribution of complex amplitude $B_2$(i, j) and an appearance of lateral staggering;

[Figs. 10] are views showing an appearance of imaging by the optical virtual-imaging system 14', a concept of a restored distribution of complex amplitude C(i, j), a concept of a distribution of complex amplitude D(i, j) generated on an image plane I', and a concept of image data E;

[Fig. 11] is a structural view of a system of an embodiment for obtaining a differential interference image;

[Fig. 12] is a view explaining a principle of measurement of a change over time of electrical field E(t) of a transmitting pulsed light L3 in an imaging apparatus 111;

[Fig. 13] is a flowchart showing a generation procedure of a differential interference image of a specimen 10A in an image processing apparatus 30;

[Figs. 14] are views schematically showing arrangements of respective pixel data $P_A$, $P_C$ when data groups of an array A(i, j) and an array C(i, j) are imaged;

[Fig. 15] is a structural view of a system of an embodiment for obtaining a phase-contrast image;

[Fig. 16] is a view explaining a principle of measurement of a change over time of electrical field E(t) of a transmitting pulsed light L3 in an imaging apparatus 111 ;

[Fig. 17] is a flowchart showing a procedure of generating a phase-contrast image of a specimen 10A in an image processing apparatus 30;

[Figs. 18] are views explaining a phase shift area (27B) on a pupil 27A;

[Fig. 19] is a view explaining a phase shift area (27C) on the pupil 27A;

[Fig. 20] is a view explaining a phase shift area (27D) on the pupil 27A;

[Fig. 21] is a structural view of a system of an embodiment for obtaining an interference image;

[Fig. 22] is a flowchart of a this observation method;

**[Figs. 23]** are views explaining Step S1;

[Figs. 24] are views explaining Step S2;

[Figs. 25] is a view explaining Steps S3, S4;

[Figs. 26] are views explaining Step S5; and

[Fig. 27] is a graph of color matching functions of an RGB color system.

*BEST MODE FOR CARRYING OUT THE INVENTION*

[Embodiment for obtaining a super-resolution image]

This embodiment is an embodiment of a super-resolution microscope system and a microscopic observation method using the same. First, the structure of this system will be explained.

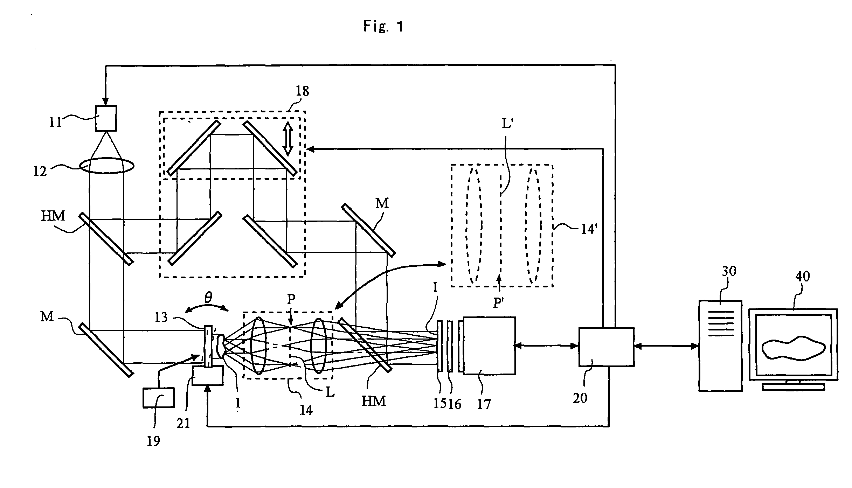

As shown in Fig. 1, this system is provided with a terahertz-spectral imaging apparatus (reference numerals 11 to 21), an image processing apparatus (computer) 30, a display 40, and so forth.

The terahertz-spectral imaging apparatus is provided with a femtosecond pulsed laser 11, a beam expander 12, a semiconductor substrate 13 to be a terahertz light source, an optical imaging system 14 made of special plastic, an electro-optical crystal 15, a polarizing plate 16, an image sensor 17, a light delaying apparatus 18, a high-voltage power supply 19, a control circuit 20, a stage 21, and so forth. Ones denoted by reference letters HM, M are a half mirror and a mirror, and one denoted by reference numeral 1 is a specimen. Incidentally, details of the terahertz-spectral imaging apparatus are disclosed in, for example, Japanese Unexamined Patent Application Publications No.

2003-295104, No. 2002-5828, and the like. Note that the light delaying apparatus 18 in Fig. 1 is illustrated such that the light delaying apparatus 18 is constituted of an optical system, but a light delaying apparatus 18 having a different structure with the same function may be used.

In the image processing apparatus 30, a program necessary for realizing this observation method (which will be described later) is installed in advance. Note that a part or the whole of processing in the control circuit 20 described below may be executed by the image processing apparatus 30, and a part or the whole of processing in the image processing apparatus 30 described below may be executed by the control circuit 20.

Next, the basic operation of this system will be explained.

The femtosecond pulsed laser 11 emits a femtosecond pulsed laser light at timing instructed by the control circuit 20. This laser light turns to a luminous flux with a large diameter through the beam expander 12 and is divided in two by the half mirror HM.

One of the laser lights divided in two is made incident via the mirror M on the semiconductor substrate 13 on which electrodes are formed. To these electrodes, voltage is applied constantly by the power supply 19, whereby electric discharge occurs between electrodes at the moment that the laser light is made incident thereon, which then becomes a dipole to radiate a pulsed light (terahertz pulsed light) in the terahertz frequency range. This terahertz pulsed light lights the specimen 1.

The light (terahertz pulsed light) radiated from the specimen 1 lighted by the terahertz pulsed light is imaged by the optical imaging system 14. On an image surface I thereof, the electro-optical crystal 15 is arranged. In the electro-optical crystal 15, modulation of birefringent index occurs according to a distribution of electrical field strength of a lightwave generated on the image surface I.

On the other hand, the other one of the laser lights divided in two is made incident on the electro-optical crystal 15 via the light delaying apparatus 18, the mirror M, and the half mirror HM. The light delaying apparatus 18 delays the timing at which the laser light is made incident on the electro-optical crystal 15 by a time (delay time) instructed from the control circuit 20.

The polarization state of the laser light incident on the electro-optical crystal 15 is modulated by a birefringent distribution in the electro-optical crystal 15. The distribution of polarization state of the laser light can be recognized as an image by the image sensor 17 by passing through the polarizing plate 16.

The image sensor 17 performs imaging at timing instructed by the control circuit 20 to obtain image data. The image data show the distribution of electrical field strength of a lightwave of the terahertz light made incident on the image surface I at the moment that the laser light is made incident on the electro-optical crystal 15.

The control circuit 20 controls timing for light emission of the femtosecond pulsed laser 11, the delay time for the light delaying apparatus 18, and timing for imaging in the image sensor 17. The control circuit 20 performs light emission and imaging while shifting the delay time by a minute amount, and obtains image data (image data group) of the distributions of electrical field strength of lightwaves generated on the image surface I at respective moments during a luminous pulse period.

The image data group is taken into the image processing apparatus 30 via the control circuit 20. The image processing apparatus 30 Fourier transforms (temporal Fourier transforms) changes over time of the distributions of electrical field strength shown by the image data group to obtain distributions of complex amplitude of respective wavelength components of lightwaves generated on the image surface 1, respectively.

Next, a characteristic operation of the terahertz-spectral imaging apparatus when implementing this observation method will be explained.

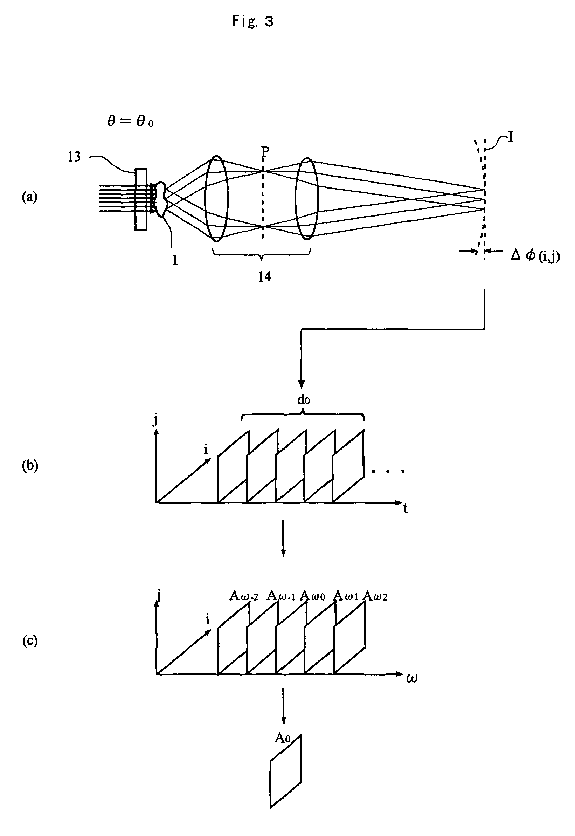

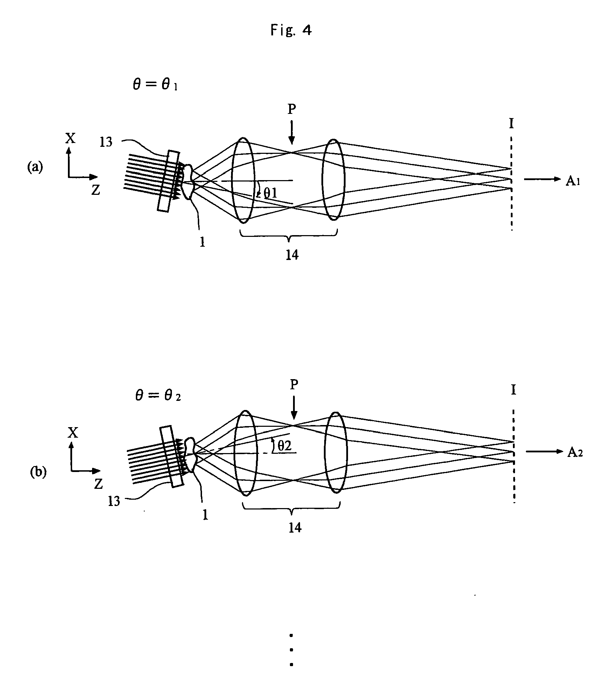

The characteristic resides in the operation of the stage 21. The stage 21 supports the semiconductor substrate 13 and changes the posture of the semiconductor substrate 13 in response to an instruction from the control circuit 20 (refer to Fig. 3(a), Figs. 4(a) and 4(b), and the like which will be explained later).

Here, an explanation will be given in which the posture of the semiconductor substrate 13 adopts an XYZ orthogonal coordinate system with the Z axis being an optical axis and is changeable to respective postures (0) to (8) as follows:

(0) Posture in which the substrate normal matches the Z axis (the oblique angle of the semiconductor substrate 13 $\theta$ = $\theta_0$);

(1) Posture in which the substrate normal is slanted by a predetermined amount in -X direction from the Z axis (the oblique angle of the semiconductor substrate 13 $\theta$ = $\theta_1$);

(2) Posture in which the substrate normal is slanted by a predetermined amount in +X direction from the Z axis (the oblique angle of the semiconductor substrate 13 $\theta$ = $\theta_2$);

(3) Posture in which the substrate normal is slanted by a predetermined amount in -Y direction from the Z axis (the oblique angle of the semiconductor substrate 13 $\theta$ = $\theta_3$);

(4) Posture in which the substrate normal is slanted by a predetermined amount in +Y direction from the Z axis (the oblique angle of the semiconductor substrate 13 $\theta$ = $\theta_4$);

(5) Posture in which the substrate normal is slanted by a predetermined amount in -X and -Y direction from the Z axis (the oblique angle of the semiconductor substrate $13\theta = \theta_5$);

(6) Posture in which the substrate normal is slanted by a predetermined amount in +X and -Y direction from the Z axis (the oblique angle of the semiconductor substrate $13\theta = \theta_6$);

(7) Posture in which the substrate normal is slanted by a predetermined amount in +X and +Y direction from the Z axis (the oblique angle of the semiconductor substrate $13\theta = \theta_7$);

(8) Posture in which the substrate normal is slanted by a predetermined amount in -X and +Y direction from the Z axis (the oblique angle of the semiconductor substrate $13\theta = \theta_8$);

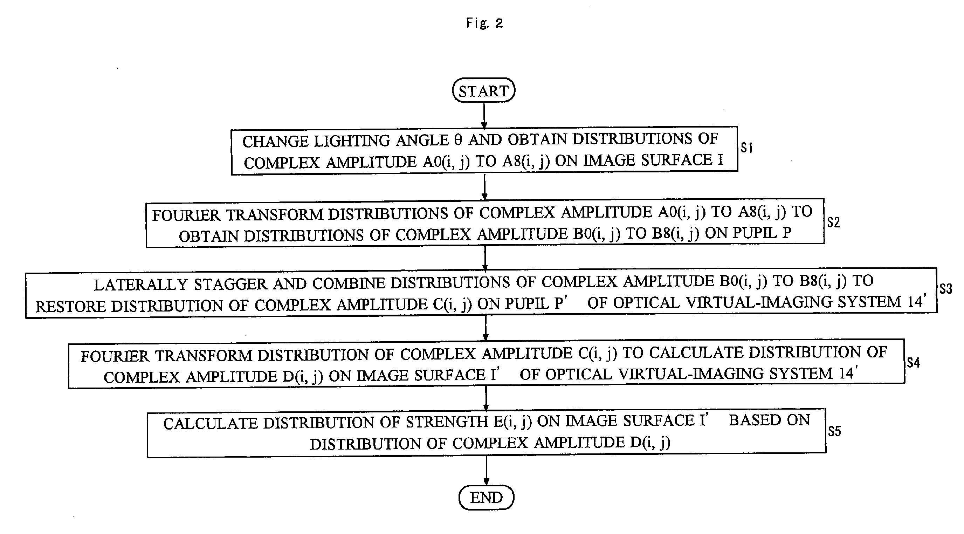

Thus, when the oblique angle $\theta$ of the semiconductor substrate 13 changes among $\theta_0$ ..., $\theta_8$, a lighting angle for the specimen 1 changes similarly. Hereinafter, the lighting angle for the specimen 1 is denoted by $\theta$.
Next, this observation method will be explained.
As shown in Fig. 2, this observation method is constituted of Step 1 to Step S5. These steps will be explained in order below.

(Step S 1)

The control circuit 20 sets the lighting angle $\theta$ to an initial value ($\theta_0$ for example) (Fig. 3(a)), and in this state, obtains the above-described image data group do (Fig. 3(b)). The image processing apparatus 30 Fourier transforms (temporal Fourier transforms) change over time of distributions of electrical field strength shown by the above-described image data do to obtain distributions of complex amplitude $A\omega_0(i, j)$, $A\omega_1(i, j)$, ... of lightwaves having respective wavelengths generated on the image surface I (Fig. 3(c)) when the lighting angle $\theta = \theta_0$. Among them, the distribution of complex amplitude $A\omega_0(i, j)$ of a lightwave having a particular wavelength (for example, a central wavelength in the terahertz frequency range) is stored. Hereinafter, a lightwave having a particular wavelength will be simply referred to as "lightwave", and the distribution of complex amplitude $A\omega o(i, j)$ of this lightwave will be expressed as "$A_0(i, j)$" by adding the same index as that of the set value "$\theta_0$" of the lighting angle $\theta$ (the same applies in the following).

Next, the control circuit 20 sets the lighting angle $\theta$ to the next value (for example $\theta_1$) (Fig. 4(a)) to obtain the image data group $d_1$, and based on the image data $d_1$, the image processing apparatus 30 obtains and stores a distribution of complex amplitude $A_1(i, j)$ of a lightwave that is generated on the image surface I when the lighting angle $\theta = \theta_1$.
Similarly, the control circuit 20 sequentially sets the lighting angle $\theta$ to $\theta_2$, ..., $\theta_8$ to sequentially obtain image data groups $d_2$, ..., $d_8$ as shown in Fig. 4(b), ..., and based on the image data groups $d_2$, ..., $d_8$, the image processing apparatus 30 obtains and stores distributions of complex amplitude $A_2(i, j)$, ..., $A_8(i, j)$ of respective lightwaves which are generated on the image surface I when the lighting angle $\theta = \theta_2$, ..., $\theta_8$, respectively.

Here, on these distributions of complex amplitude $A_0(i, j)$, $A_1(i, j)$, $A_2(i, j)$, ..., $A_8(i, j)$, a phase component $\Delta\phi(i, j)$ is superimposed, which is superimposed in common on each of the lightwaves by a single body of the optical imaging system 14 in a state that the specimen 1 is not present (refer to a dotted line part in Fig. 3(a)).
In this step, the image processing apparatus 30 corrects the component $\Delta\phi(i, j)$ from each of the distributions of complex amplitude $A_0(i, j)$, $A_1(i, j)$, $A_2(i, j)$, ..., $A_8(i, j)$.

Note that the phase component $\Delta\phi(i, j)$ to be corrected is inherent to the terahertz-spectral imaging apparatus and is measured in advance (for example, an image data group d is obtained in a state that the specimen 1 is not arranged and, based on the image data group d, a distribution of complex amplitude of a lightwave generated on the image surface I in this state is obtained, whereby an obtained phase component may be the phase component $\Delta\phi(i, j)$ to be corrected).

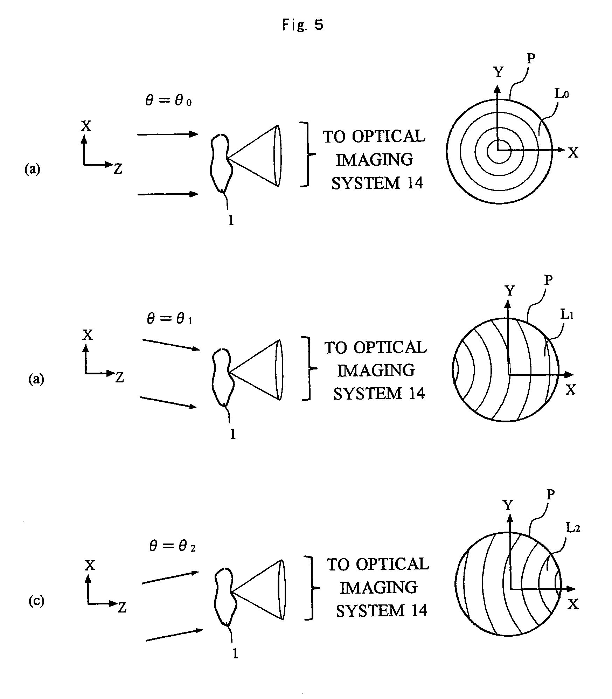

Next, as shown on left sides of Figs. 5(a), 5(b), 5(c), at each of the lighting angle $\theta = \theta_0$, $\theta = \theta_1$, $\theta = \theta_2$, ..., $\theta = \theta_8$, the radiation angle of each diffraction beam generated on the specimen 1 displaces.
Then, with each of the lighting angles $\theta = \theta_0$, $\theta = \theta_1$, $\theta = \theta_2$, ..., $\theta = \theta_8$, a luminous flux which contributes to imaging (namely, a luminous flux that can pass through the optical imaging system 14) is different.

Accordingly, with each of the lighting angles $\theta = \theta_0$, $\theta = \theta_1$, $\theta = \theta_2$, ..., $\theta = \theta_8$, a lightwave generated on a pupil P of the optical imaging system 14 is also different.
Hereinafter, lightwaves generated on the pupil P of the optical imaging system 14 with the respective lighting angles $\theta = \theta_0$, $\theta = \theta_1$, $\theta = \theta_2$, ..., $\theta = \theta_8$ are denoted by $L_0$, $L_1$, $L_2$, ..., $L_8$, and differences in these lightwaves $L_0$, $L_1$, $L_2$,..., $L_8$ are explained.

For explanation, a virtual system as follows is assumed. This virtual system is constructed such that, in the system shown in Fig. 1, the optical imaging system 14 is replaced by an optical virtual-imaging system 14' having a larger numerical aperture than that of the optical imaging system 14, and the lighting angle $\theta$ is fixed to $\theta_0$.

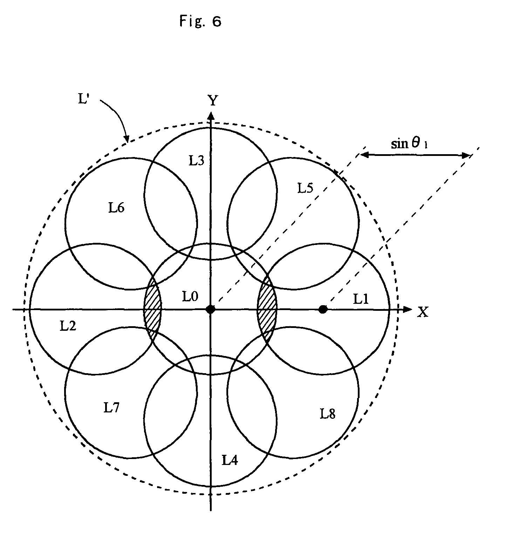

Fig. 6 shows the correspondence between the respective lightwaves $L_0$, $L_1$, $L_2$, ..., $L_8$ generated on the pupil P of the optical imaging system 14 of this system with a virtual lightwave L' generated on a pupil P' of the optical virtual-imaging system 14' of the virtual system.

As shown in Fig. 6, the lightwave $L_0$ corresponds to a lightwave at a central area of the virtual lightwave L'.

The lightwave $L_1$ corresponds to a lightwave in an area displaced in +X direction from the center of the virtual lightwave L'.

The lightwave $L_2$ corresponds to a lightwave in an area displaced in -X direction from the center of the virtual lightwave L'.

The lightwave $L_3$ corresponds to a lightwave in an area displaced in +Y direction from the center of the virtual lightwave L'.

The lightwave $L_4$ corresponds to a lightwave in an area displaced in -Y direction from the center of the virtual lightwave L'.

The lightwave $L_5$ corresponds to a lightwave in an area displaced in +X and +Y direction from the center of the virtual lightwave L'.

The lightwave $L_6$ corresponds to a lightwave in an area displaced in -X and +Y direction from the center of the virtual lightwave L'.

The lightwave $L_7$ corresponds to a lightwave in an area displaced in -X and -Y direction from the center of the virtual lightwave L'.

The lightwave $L_8$ corresponds to a lightwave in an area displaced in +X and -Y direction from the center of the virtual lightwave L'.

Thus, respective diffraction beam patterns formed on the pupil P of the optical imaging system 14 by the respective lightwaves $L_0$, $L_1$, $L_2$ ..., $L_8$ correspond to ones which cut out diffraction patterns of areas which are displaced from each other from a large diffraction pattern formed by the virtual lightwave L' on the pupil P' of the optical virtual- imaging system 14'.

On right sides of Figs. 5(a), 5(b), 5(c), concepts of respective diffraction patterns formed by the lightwaves $L_0$, $L_1$, $L_2$ on the pupil P are shown.

Here, in Fig. 6, the displacement in position from the center of the virtual lightwave L' to a certain lightwave $L_i$ is determined by a set value $\theta_i$ of the lighting angle $\theta$ (that is, proportional to sin $\theta$).

The respective set values $\theta_1$, $\theta_2$, ..., $\theta_8$ are optimized to have the overlapping areas of the respective lightwaves $L_0$, $L_1$, ..., $L_8$ shown in Fig. 6 as small as possible, and so that the respective lightwaves $L_0$, $L_1$, ..., $L_8$ can cover a range of the virtual lightwave L' as large as possible without any gap.

(Step S2)

The image processing apparatus 30 Fourier transforms (spatial Fourier transforms) the distributions of complex amplitude $A_0(i, j)$, $A_1(i, j)$, $A_2(i, j)$, ..., $A_8(i, j)$ obtained in Step S1 to calculate distributions of complex amplitude $B_0(i, j)$, $B_1(i, j)$, $B_2(i, j)$, ..., $B_8(i, j)$ of the respective wavelength $L_0$, $L_1$, $L_2$, ..., $L_8$ shown in Fig. 6, respectively.

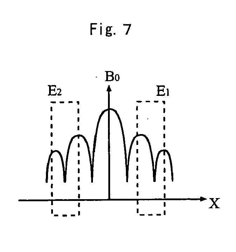

In Fig. 7, Fig. 8(a), and Fig. 9(a), concepts of the calculated distributions of complex amplitude $B_0(i, j)$, $B_1(i, j)$, $B_2(i, j)$ are shown by coordinates on the pupil P of the optical imaging system 14.

Note that data ranges in X direction in Fig. 7, Fig. 8(a), and Fig. 9(a) correspond to the diameter of the pupil P (diameter of the exit pupil) of the optical imaging system 14.

(Step S3)

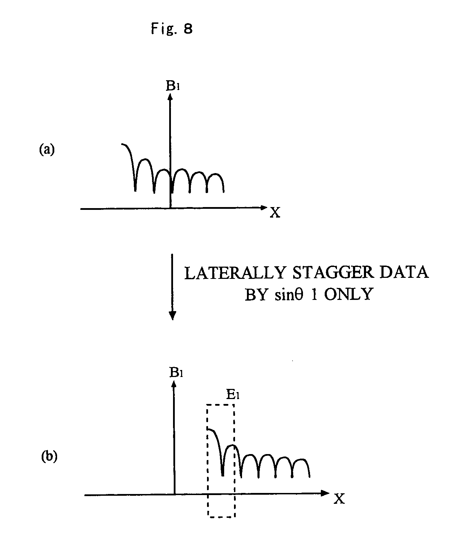

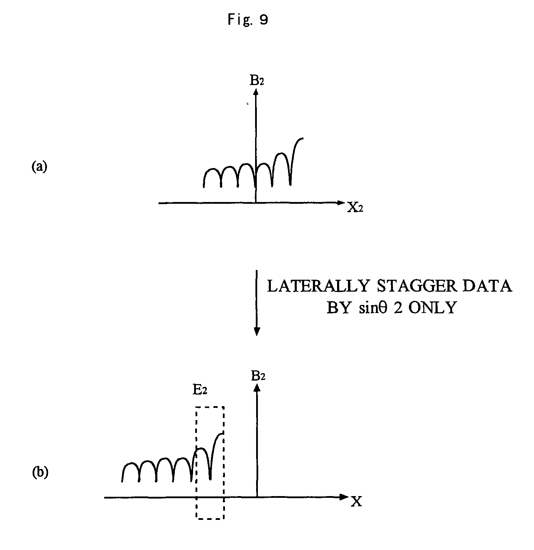

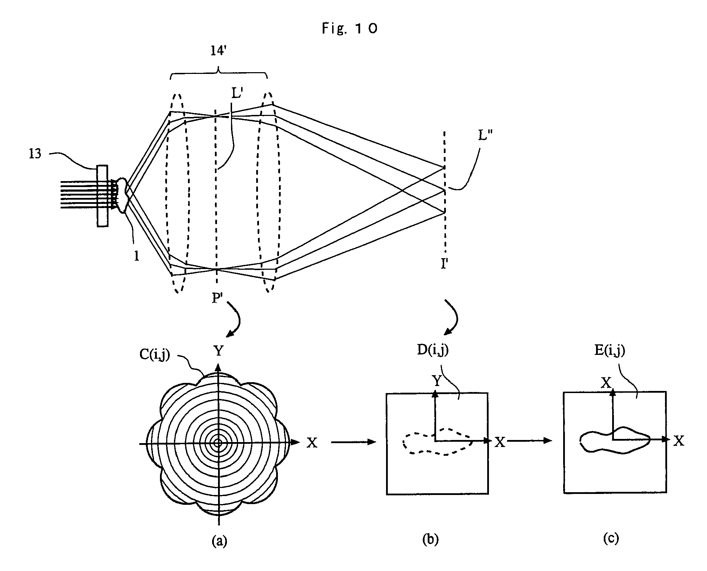

As shown in Fig. 8(b), Fig. 9(b), the image processing apparatus 30 laterally staggers data of the distributions of complex amplitude $B_1(i, j)$, $B_2(i, j)$, ..., $B_8(i, j)$ by sin $\theta$ in coordinates on the pupil P respectively and combines the data of the distributions of complex amplitude $B_1(i, j)$, $B_2(i, j)$, ..., $B_8(i, j)$ after the lateral staggering, to thereby restore a distribution of complex amplitude C(i, j) of the virtual lightwave L' generated on the pupil P' of the optical virtual-imaging system 14'. Fig. 10(a) shows the concept of the restored distribution of complex amplitude C(i, j).

Here, in principle, between the respective distributions of complex amplitude $B_1(i, j)$, $B_2(i, j)$, ..., $B_8(i, j)$, data of overlapping areas (such as shaded portions in Fig. 6) become equal to each other.

However, in practice, due to environmental changes in the system (uncertainty of power for the light source during a period of changing the lighting angle $\theta$, variation in refractive index of the optical path, and the like), it is possible that offsets (phase offset and amplitude offset) overlap with the data of the distributions of complex amplitude $B_1(i, j)$, $B_2(i, j)$, ..., $B_8(i, j)$, respectively.

Accordingly, upon restoration, the image processing apparatus 30 compares data of the overlapping areas in the respective distributions of complex amplitude $B_0(i, j)$, $B_1(i, j)$, $B_2(i, j)$, ..., $B_8(i, j)$ (for example, compares data of an area E1 in Fig. 7 with data of an area E1 in Fig. 8, data of an area E2 in Fig. 7 with data of an area E2 in Fig. 9, and so forth), and corrects the respective phase offsets and amplitude offsets from the data of the respective distributions of complex amplitude $B_0(i, j)$, $B_1(i, j)$, $B_2(i, j)$, ..., $B_8(i, j)$ so that the data of the overlapping areas become equal to each other. Thus, "steps" in data between the respective distributions of complex amplitude $B_0(i, j)$, $B_1(i, j)$, $B_2(i, j)$, ..., $B_8(i, j)$ are eliminated.

(Step S4)

The image processing apparatus 30 inverse Fourier transforms the distribution of complex amplitude C(i, j) of the virtual wavelength L' to obtain a distribution of complex amplitude D(i, j) of a virtual wavelength L" generated on an image surface I' of the optical virtual-imaging system 14' of the virtual system. In Fig. 10(b), the concept of the distribution of complex amplitude D(i, j) is shown.

(Step S5)

The image processing apparatus 30 generates, by Equation (1) below based on the distribution of complex amplitude D(i, j), image data E(i, j) of a virtual image of the specimen 1 formed on the image surface I' by the optical virtual-imaging system 14' of the virtual system.

$$E(i, j) = D^*(i, j) \times D(i, j) \ ... \ (1)$$

Fig. 10(c) shows the concept of the image data E(i, j).

The image processing apparatus 30 transmits the image data E(i, j) to the display 40 to display the image of the specimen 1 (refer to Fig. 1).

Next, effects of this system and this observation method will be explained.

In this system, since the stage 21 is provided to change the posture of the semiconductor substrate 13, the lighting angle $\theta$ of the specimen 1 is variable. Thus, it becomes possible to implement this observation method as follows. This observation method measures the distributions of complex amplitude $A_0(i, j)$, $A_1(i, j)$, ..., $A_8(i, j)$ generated separately on the image surface I when the lighting angle $\theta = \theta_0, \theta_1, \theta_2, ..., \theta_8$. Based on data of the measured distributions of complex amplitude $A_0(i, j)$, $A_1(i, j)$, ..., $A_8(i, j)$, the image data E(i, j) of the virtual image of the specimen 1 formed by the optical virtual-imaging system 14' can be generated.

The numerical aperture of this optical virtual-imaging system 14' corresponds to the covering range by the respective lightwaves $L_0$, $L_1$, $L_2$, ..., $L_8$ in Fig. 6, and thus is approximately three times larger than the numerical aperture of the optical imaging system 14. Therefore, the image data E(i, j) expresses the specimen 1 with a high resolution that exceeds the performance of the optical imaging system 14.

Further, for reliable operation, in this measurement method, the distributions of complex amplitude $A_0(i, j)$, $A_1(i, j)$, ..., $A_8(i, j)$ are converted once into the distributions of complex amplitude $B_0(i, j)$, $B_1(i, j)$, $B_2(i, j)$, ..., $B_8(i, j)$ on the pupil P of the optical imaging system 14, and the distributions of complex amplitude $B_0(i, j)$, $B_1(i, j)$, $B_2(i, j)$, ..., $B_8(i, j)$ are laterally staggered and combined, thereby restoring the distribution of complex amplitude C(i, j) on the pupil P' of the optical virtual-imaging system 14'.

Further, in this observation method, since the phase component $\Delta\phi$ (i, j) is corrected from each of the distributions of complex amplitude $A_0(i, j)$, $A_1(i, j)$, $A_2(i, j)$, ..., $A_8(i, j)$ in the relatively earlier procedure (Step S1), data (such as the distributions of complex amplitude C(i, j), D(i, j), image data E(i, j), and the like) needed for later steps can be obtained simply with high precision.

Further, in this measurement method, the data of the overlapping areas between the distributions of complex amplitude $B_0(i, j)$, $B_1(i, j)$, $B_2(i, j)$, ..., $B_8(i, j)$ are used to eliminate "steps" in these data in the restoring procedure (Step S3), and thus necessary data can be obtained with high precision regardless of environmental changes of the system during measurement.

Note that in this observation method, there are nine types, $\theta_0, \theta_1, \theta_2, ..., \theta_8$, of the set values for the lighting angle $\theta$, and the numerical aperture of the optical imaging system 14' is about three times the numerical aperture of the optical imaging system 14, but the combination of the set values of the lighting angle $\theta$ is selected appropriately depending on a needed resolution (it is possible to be larger than three times).

Further, this observation method employs the terahertz-spectral imaging apparatus using light in the terahertz frequency range as the illumination for the microscope apparatus, but may employ a similar spectral imaging apparatus using light in a range outside the terahertz frequency range as the illumination.

Further, in this system, a non-scanning microscope apparatus which obtains image data of the distribution of electrical field strength of the image surface I at once is applied, but a scanning microscope apparatus which obtains image data of the distribution of electrical field strength is obtained one by one may also be used.

[Embodiment for obtaining a differential interference image]

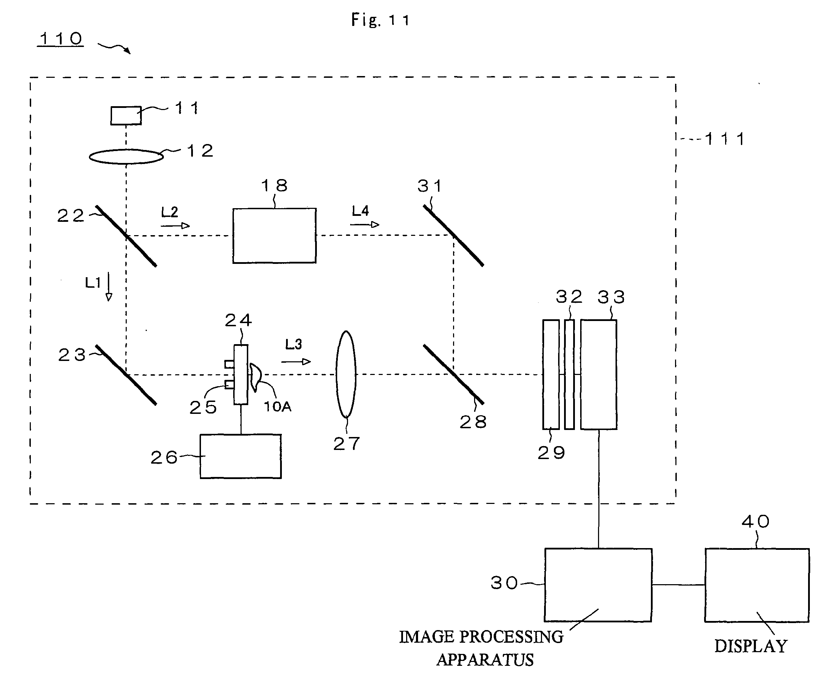

As shown in Fig. 11, a differential interference microscope system 110 of this embodiment is constituted of a terahertz-spectral imaging apparatus 111, an image processing apparatus 30, and a display 40. In the differential interference microscope system 110 of this embodiment, an interference apparatus (for example, a Nomarski prism), which is essential to conventional typical differential interference microscopes, is not incorporated. This differential interference microscope system 110 takes in an image signal from the terahertz-spectral imaging apparatus 111 into the image processing apparatus 30, and generates a differential interference image of a specimen 10A by image processing.

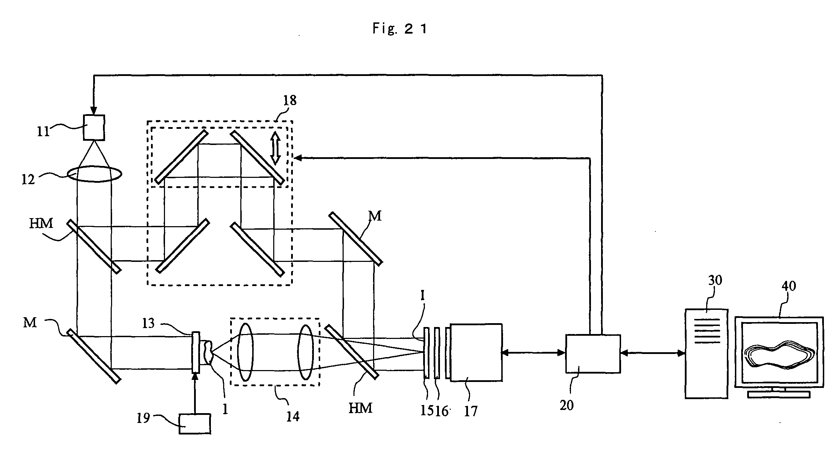

Here, the terahertz-spatial imaging apparatus 111 will be explained briefly. This terahertz-spectral imaging apparatus 111 corresponds to one in which the stage (numeric symbol 21 in Fig. 21) for changing the posture of the semiconductor substrate is omitted in the terahertz-spectral imaging apparatus shown in Fig. 1. Details of the terahertz-spectral imaging apparatus 111 are described in, for example, Japanese Unexamined Patent Application Publications No. 2002-98634.

In the terahertz spectral imaging apparatus 111, after a light radiated from the femtosecond pulsed laser 11 passes through the beam expander 12, the light is divided in two directions by a half mirror 22 (lights L1, L2). One light L1 is made incident on a semiconductor substrate 24 via a mirror 23. The semiconductor substrate 24 has electrodes 25 formed thereon, and voltage is applied constantly to the electrodes 25 from a high-voltage power supply 26. Accordingly, at the moment that the light L1 is made incident on the semiconductor substrate 24, electric discharge occurs between the electrodes 25, which then becomes a dipole to radiate a pulsed light (terahertz pulsed light) in the terahertz frequency range.

Then, the entire specimen 10A is lighted by this terahertz pulsed light. The lighting by the terahertz pulsed light is equivalent to a point light source (namely, lighting by a parallel light). Further, in this embodiment, the direction of movement of the terahertz pulsed light is in parallel to the optical axis of an optical imaging system 27, which will be described later.

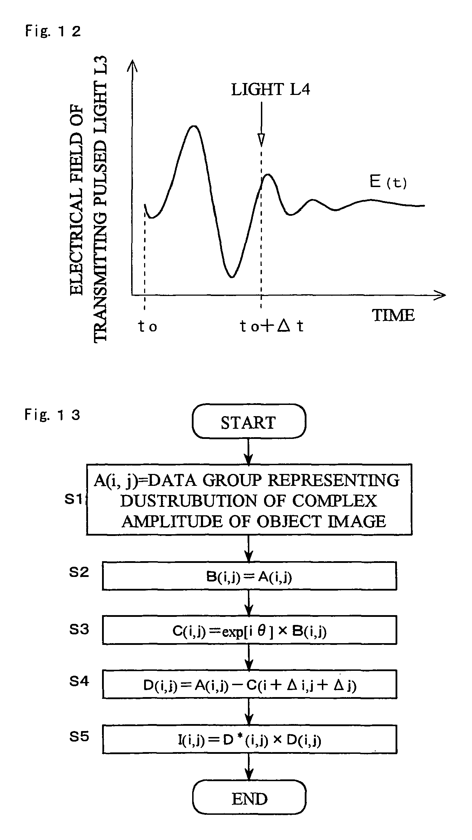

When the specimen 10A is lighted by the terahertz pulsed light, a transmitting pulsed light L3 generated from the specimen 10A is gathered by an optical imaging system 27 made of special plastic (for example, made of polyethylene) and made incident on an electro-optical crystal 29 which exhibits an electro-optical effect via a half mirror 28. At this time, on the electro-optical crystal 29 (image surface of the optical imaging system 27), an image (object image) of the specimen 10A is formed by the transmitting pulsed light L3. Further, at respective points on the electro-optical crystal 29, "modulation of birefringent index" occurs depending on brightness/darkness of the object image (namely, strength/weakness of the electrical field of the transmitting pulsed light L3 exemplified in Fig. 12).

To detect such "modulation of birefringent index" in the electro-optical crystal 29, the other light L2 divided by the half mirror 22 is used as a probe beam. The pulse width of the light L2 is of the order of femtosecond. After passing through a light delaying apparatus 18 (light L4), the light L2 is made incident on the electro-optical crystal 29 via the mirror 31 and the half mirror 28. The time to + $\Delta t$ (Fig. 12) of making the light L4 incident on the electro-optical crystal 29 is freely adjustable by the light delaying apparatus 18 on the basis of the time to when the above transmitting pulsed light L3 is made incident on the electro-optical crystal 29. As the structure of the light delaying apparatus 18, for example, one is conceivable in which the optical path length is changed by a catoptric system.

Further, the light L4 is made incident on the electro-optical crystal 29 in a linear polarization state. Then, the polarization state of the light L4 changes according to the "modulation of birefringent index" at time to + $\Delta t$ (Fig. 12) when it is induced by the electro-optical crystal 29 according to the brightness/darkness of the object image by the transmitting pulsed light L3 from the specimen 10A. Further, the amount of change in this polarization state is converted into strength/weakness of an optical electrical field via a polarizing plate 32 and detected by an image sensor 33.

A detection signal by the image sensor 33 is in proportional to the amount of change in the polarization state of the light L4, proportional to the "modulation of birefringent index" at time to + $\Delta t$ in the electro-optical crystal 29, proportional to brightness/darkness of the object image formed on the electro-optical crystal 29, and further proportional to an instantaneous value (real number) at time to + At of the electrical field of the transmitting pulsed light L3 (transmitting pulsed light L3 incident on the electro-optical crystal 29) from the specimen 10A. This detection signal is outputted as an imaging signal to the image processing apparatus 30.

The image processing apparatus 30 digitizes the imaging signal from the image sensor 33 of the above-described terahertz-spectral imaging apparatus 111 and takes it in as digital data. Therefore, in the image processing apparatus 30, it is possible to know the instantaneous value (real number) at time to + $\Delta t$ of the electrical field of the transmitting pulsed light L3 (transmitting pulsed light L3 incident on the electro-optical crystal 29) from the specimen 10A, according to the digital data.

Further, while adjusting the time to + At (Fig. 12) for making the light L4 incident on the electro-optical crystal 29 with the light delaying apparatus 18 of the terahertz-spectral imaging apparatus 111, similar digital data are continuously taken into the image processing apparatus 30. Accordingly, respective instantaneous values of the electrical field in one pulse width of the transmitting pulsed light L3 from the specimen 10A, namely, a change over time of electrical field E(t) can be measured. The change over time of electrical field E(t) of the transmitting pulsed light L3 represent a change over time of brightness/darkness of the object image formed on the electro-optical crystal 29, and are obtained for each position on the object image as an aggregate of pixel data (data group).

When the measurement of the change over time of electrical field E(t) is thus completed, the image processing apparatus 30 Fourier transforms the change over time of electrical field E(t) (namely, separates the light) for each position on the object image. As a result, a complex amplitude $E_1(\omega)$ of Equation (2) below can be obtained for each of various wavelength components constituting the transmitting pulsed light L3 at each position on the object image. In the complex amplitude $E_1(\omega)$, $|E_1(\omega)|$ represents amplitude, and $\psi_1$ represents phase. The complex amplitude $E_1(\omega)$ is a complex number.

$$E_1(\omega) = \Sigma E(t)\exp(-i\omega t) = |E_1(\omega)|\exp(i\psi_1) \ldots (2)$$

Complex amplitudes $E_1(\omega)$ of respective wavelength components at each position on the object image are also an aggregate of pixel data (data group). Among them, when a data group related to any one of wavelength components is extracted, it represents a distribution of complex amplitude of the object image of this wavelength component (image of the specimen 10A formed on the electro-optical crystal 29).

However, on the phase $\psi_1$ of a complex amplitude $E_1(\omega)$ obtained by the above Fourier transform, superimposed are not only phase information of the specimen 10A itself but also a component (hereinafter, "error component $\psi_2$") depending on a distance from each point on the specimen 10A to the conjugate point on the electro-optical crystal 29 (namely, image surface). This error component $\psi_2$ varies depending on the position of each point on the specimen 10A and is irrelevant to the phase information of the specimen 10A itself, and thus it is necessary to be removed as follows.

To obtain the error component $\psi_2$, the change over time of electrical field E(t) similarly to the above is measured and Fourier transformed in a state that the specimen 10A is not placed. As a result, a complex amplitude $E_2(\omega)$ of each of wavelength components at each position on the electro-optical crystal 29 (namely on the image surface) can be obtained. In the complex amplitude $E_2(\omega)$, the phase $\psi_2$ corresponds to the "error component $\psi_2$".

$$E_2(\omega) = |E_2(\omega)|\exp(i\psi_2) \ldots (3)$$

Then, the error component $\psi_2$ in Equation (3) is used to correct the phase $\psi_1$ in Equation (2) according to Equation (4) below. Therefore, the error component $\psi_2$ which is irrelevant to the phase information of the specimen 10A itself and varies depending on a position of each point on the specimen 10A can be easily removed. As a result, a complex amplitude $E_3(\omega)$ of Equation (4) including only the phase information of the specimen 10A itself as the phase $[\psi_1 - \psi_2]$ can be obtained.

$$E_3(\omega) = |E_1(\omega)|\exp(i[\psi_1 - \psi_2]) \ldots (4)$$

Also the complex amplitude $E_3(\omega)$ after the correction by Equation (4) is generated for each of wavelength components at each position on the object image (image of the specimen 10A formed on the electro-optical crystal 29), thereby composing an aggregate of pixel data (data group). In the data group, a data group related to any one of wavelength components represents a pure distribution of complex amplitude of the object image of this wavelength component.

After completing generation of the complex amplitude $E_3(\omega)$ after correction, the image processing apparatus 30 uses the complex amplitude $E_3(\omega)$ after correction to perform image processing according to a procedure of a flowchart of Fig. 13, thereby generating a differential interference image of the specimen 10A. The image processing of Fig. 13 is performed for each data group related to each of wavelength components.

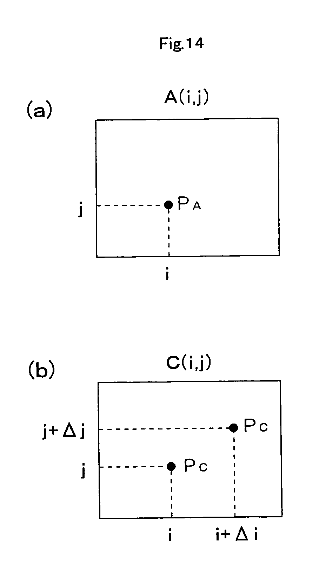

In Step S1, a data group (namely a data group representing a distribution of complex amplitude of the object image) related to the complex amplitude $E_3(\omega)$ after correcting a certain wavelength component is stored in an array A(i, j) for arithmetic operation. The "i" and "j" denote an address of each pixel data in the stored data group. An arrangement of each pixel data $P_A$ at the time of imaging the data group in the array A(i, j) is schematically shown in Fig. 14(a). Each pixel data $P_A$ represents a complex amplitude $E_3(\omega)$ at each position on the object image.

Next (Step S2), a copy of the array A(i, j) is made, which is then referred to as an array B(i, j). Respective pixel data in the data group in the array B(i, j) are the same as respective pixel data $P_A$ in the data group in the array A(i, j).

Next (Step S3), each of all the pixel data $P_A$ in the data group in the array B(i, j) is multiplied by a predetermined complex number given by $\exp[i\theta]$. This processing corresponds to processing of shifting the phase $[\psi_1 - \psi_2]$ of the complex amplitude $E_3(\omega)$ of each of the pixel data $P_A$ by a predetermined amount (phase $\theta$). The data group generated by this processing is stored in an array C(i, j). Arrangements of respective pixel data $P_C$ at the time of imaging the data group in the array C(i, j) are schematically shown in Fig. 14(b). The complex amplitude $E_4(\omega)$ of each pixel data $P_C$ is represented by Equation (5) below.

$$E_4(\omega) = |E_1(\omega)|\exp(i[\psi_1 - \psi_2 + \theta]) \ldots (5)$$

Next (Step S4), each pixel data $P_A$ (refer to Fig. 14(a)) of the data group in the array A(i, j) and each pixel data Pc (refer to Fig. 14(b)) of the data group in the array C(i, j) are used to calculate differences in pixel data of the respective data groups from each other. At this time, not in the pixel data $P_A$, Pc at the same address, but in the pixel data $P_A$, Pc at addresses which are different in relative positions by a predetermined amount ($\triangle i$, $\triangle j$) in a predetermined direction when each data group is imaged, a difference in complex amplitudes $E_3(\omega)$, $E_4(\omega)$ thereof is obtained. The data group generated in this processing is stored in an array D(i, j).

Here, a correspondence between the processing in the above-described Steps S3, S4 and conventional typical differential interference microscopes will be explained. In a conventional differential interference microscope, a specimen is lighted vertically by two luminous fluxes separated by a polarizing prism such as Wollaston prism or Nomarski prism, and two luminous fluxes generated from the specimen are brought into interference via a polarizing prism and an analyzer and thereby lead to an image surface. The gap between the two luminous fluxes (amount of displacing optical axes) is very small, which is equal to or smaller than the resolution of the objective lens of the differential interference microscope. This amount of displacing the optical axes and a phase difference (retardation) of the two luminous fluxes at the time of interference are determined depending on optical characteristics of the polarizing prism.

With respect to such a conventional differential interference microscope, in the differential interference microscope system 110 of this embodiment, a difference between each pixel data $P_A$ (Fig. 14(a)) of the data group in the array A(i, j) and each pixel data $P_C$ (Fig. 14(b)) of the data group in the array C(i, j) is obtained in Step S4 of Fig. 13, and an overlapping effect similar to the above-described interference (after passing the analyzer) of the two luminous fluxes is generated numerically.

Further, at this time, between the data group in the array A(i, j) and the data group in the array C(i, j), a relative displacement in position ($\triangle i$, $\triangle j$) is set (S4) and a phase difference $\theta$ is set (S3). The displacement in position ($\triangle i$, $\triangle j$) corresponds to the above-described gap (amount of displacing optical axes) between the two luminous fluxes. The phase difference $\theta$ corresponds to the phase difference (retardation) between the two fluxes at the time of interference. Incidentally, when observing a minute step of the specimen 10A with high sensitivity, it is preferable to use the phase difference $\theta = \pm\pi/2$, and $\exp(i\theta) = i$ (or -i).

Thus, by performing the processing in Steps S3, S4, the differential interference microscope system 110 of this embodiment can attain an effect numerically (namely, an interference of two distributions of complex amplitude having a relative displacement in position ($\Delta i$, $\Delta j$) and a phase difference $\theta$) similar to an interference apparatus (for example, Nomarski prism or the like) that is essential to a conventional differential interference microscope.

Note that imaging by means of terahertz pulsed light is imaging in which the size of a light source can almost be ignored (by means of point light source), and the transmitting pulsed light L3 generated from the specimen 10A is spatially coherent (same phase regardless of a position on the specimen 10A). Accordingly, by just overlapping two distributions of complex amplitude which are displaced by a minute amount from each other, it is possible to obtain the same interference effect as conventional differential interference microscope.

After completing the processing in Steps S3, S4, the image processing apparatus 30 proceeds to processing in Step S5, and obtains the square of the absolute value of the complex amplitude of the pixel data $P_D$ from each pixel data $P_D$ in a data group (namely the data group in the array D(i, j)) representing the above-described distribution of complex amplitude after overlapping (interfering). A data group generated in this processing is stored in an array I(i, j). The data group in the array I(i, j) represents a distribution of intensity of an object image (namely a differential interference image of the specimen 10A).

As described above, in the differential interference microscope system 110 in this embodiment, an imaging signal from the terahertz-spectral imaging apparatus 111 is taken into the image processing apparatus 30 and is image processed according to the procedure of the flowchart of Fig. 13, and thereby the differential interference image of the specimen 10A can be generated in a deterministic manner. In other words, without using a dedicated interference apparatus (Nomarski prism for example) which is essential to a conventional typical differential interference microscope, the differential interference image of the specimen 10A can be generated.

Further, the differential interference microscope system 110 of this embodiment can observe the differential interference image of the specimen 10A by using the data group in the array I(i, j) obtained last by the image processing of Fig. 13 and outputting respective pixel data thereof to the display 40. At this time, the differential interference image of the specimen 10A may be displayed for each of lightwave components thereof, or may be displayed after performing an arithmetic operation of the data groups of respective wavelength components with each other.

Furthermore, in the differential interference microscope system 110 of this embodiment, in Steps S3, S4 in Fig. 13, the phase difference θ and the relative displacement in position (△i, △j) of two distributions of complex amplitude (the data group in the array A(i, j) and the data group in the array C(i, j)) to be brought into interference numerically can be set freely. Accordingly, differential interference images of the same object under various conditions can be obtained easily, whereby it is possible to choose an optimum observation condition for the specimen 10A to obtain a differential interference image at this time.

(Modification example)

Note that in the above-described embodiment, a "difference" is obtained in the processing of Step S4 of Fig. 13, but the present invention is not limited to this. Also when obtaining a "sum", the same interference effect as that of conventional interference microscopes can be obtained, and the present invention can be applied thereto.

Further, in the above-described embodiment, an example of non-scanning type is explained, in which the amount of change in polarization state of the probe beam (L4) is detected at once by the image sensor 33 of the terahertz-spectral imaging apparatus 111, but the present invention is not limited to this. The present invention can also be applied to a case (scanning type) where the terahertz pulsed light is irradiated on a local area of the specimen 10A, and the amount of change in polarization state of the probe beam (L4) is detected while relative positions of the irradiated area of the terahertz pulsed light and the specimen 10A are changed.

Furthermore, in the above-described embodiment, an example of forming an object image on the electro-optical crystal 29 based on the transmitting pulsed light L3 generated from the specimen 10A (transmission-type terahertz-spectral imaging apparatus 111) is explained, but the present invention is not limited to this. The present invention can also be applied to a case (reflective type) where the object image is formed based on a reflected pulsed light generated from the specimen.

Further, in the above-described embodiment, an example in which the specimen 10A is lighted by a terahertz pulsed light is explained, but the present invention is not limited to this. The present invention can also be applied to a case where the specimen 10A is lighted by a pulsed light in another frequency range. For example, in the case where the central wavelength band is in the visible light range, it is needed to increase the time resolution of the femtosecond pulsed laser 11 of the terahertz-spectral imaging apparatus 111, change the material of the optical imaging system 27, and use one having faster response time as the electro-optical crystal 29.

Furthermore, in the above-described embodiment, an example of the differential interference microscope system 110 having the terahertz-spectral imaging apparatus 111 is explained, but the present invention is not limited to this. The present invention can also be applied to a case where the terahertz-spectral imaging apparatus 111 is omitted (namely, to a differential interference microscope apparatus constituted of the image processing apparatus 30 and the display 40). In this case, a differential interference image of the specimen 10A can be generated by just inputting the data group related to the complex amplitude $E_3(\omega)$ similarly to the above (namely, the data group representing the distribution of complex amplitude of the object image) to the image processing apparatus 30.

[Embodiment for obtaining a phase-contrast image]

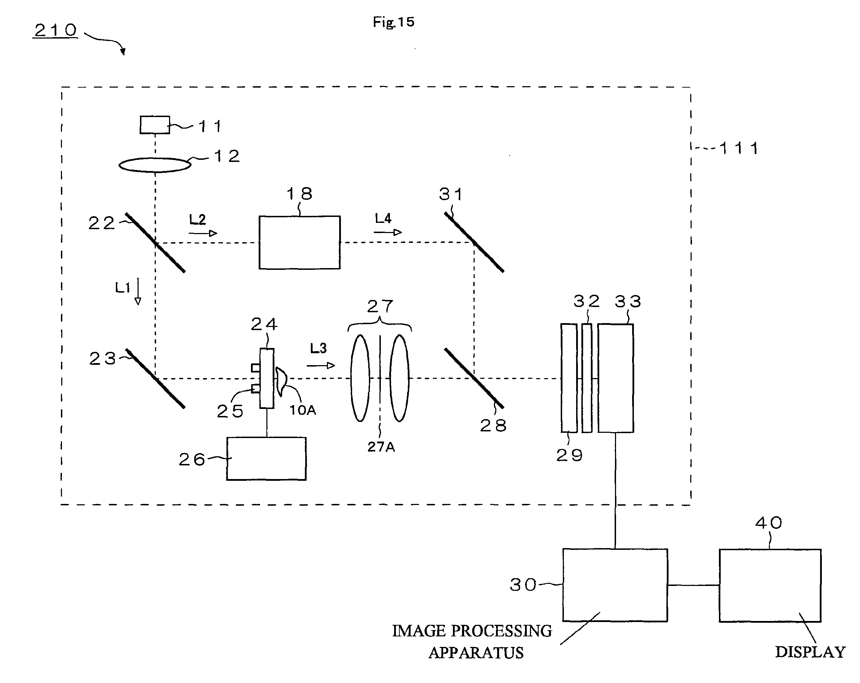

As shown in Fig. 15, a phase-contrast microscope system 210 in this embodiment is constituted of a terahertz-spectral imaging apparatus 111, an image processing apparatus 30, and a display 40. In the phase-contrast microscope system 210 of this embodiment, an optical member (phase plate) which is essential to a conventional typical phase-contrast microscope apparatus is not incorporated. This phase-contrast microscope system 210 takes an imaging signal from the terahertz-spectral imaging apparatus 111 into the image processing apparatus 30, and generates a phase-contrast image of a specimen 10A by image processing. Among them, the structure of the terahertz-spectral imaging apparatus 111 is the same as the structure of the terahertz-spectral imaging apparatus shown in Fig. 11.

In this terahertz-spectral imaging apparatus 111, a transmitting pulsed light L3 from the specimen 10A includes a direct light in pulsed form and a diffraction beam. The direct light means a zero-order diffraction beam. The "diffraction beam" used in contrast to the direct light is a diffraction beam of ±1 order or higher. In the phase-contrast microscope system 210 of this embodiment, since the phase plate is not arranged on a pupil plane 27A of the optical imaging system 27, a phase difference between the direct light and the diffraction beam of the transmitting pulsed light L3 is 90 degrees when the specimen 10A has a minute uneven (phase) structure. Therefore, it is not possible to obtain an object image with a high contrast even when the direct light and the diffraction beam interfere on the image surface (electro-optical crystal 29) of the optical imaging system 27. In other words, it is conceivable that the contrast of the object image is low.

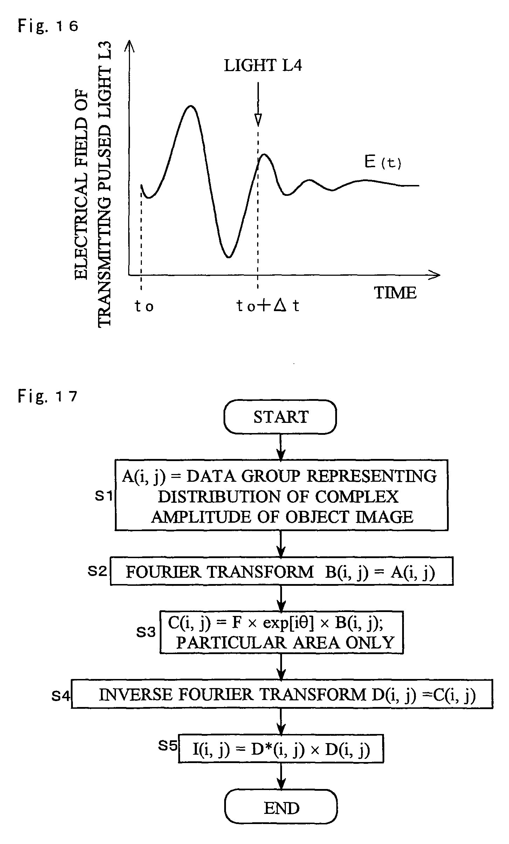

Then, to detect modulation of birefringent index induced by an electro-optical crystal 29 according to brightness/ darkness of such an object image, the other light L2 divided by the half mirror 22 is used as a probe beam. The pulse with of the light L2 is of the order of femtosecond. After passing through a light delaying apparatus 18 (light L4), the light L2 is made incident on the electro-optical crystal 29 via the mirror 31 and the half mirror 28. The time to + Δt (Fig. 16) for making the light L4 incident on the electro-optical crystal 29 is freely adjustable by the light delaying apparatus 18 on the basis of the time to when the above transmitting pulsed light L3 is made incident on the electro-optical crystal 29.

Further, the light L4 is made incident on the electro-optical crystal 29 in a linear polarization state. Then, the polarization state of the light L4 changes according to the "modulation of birefringent index" at time to + Δt (Fig. 16) when it is induced by the electro-optical crystal 29 according to the brightness/darkness of the object image by the transmitting pulsed light L3 from the specimen 10A. Further, the amount of change in this polarization state is converted into strength/weakness of an optical electrical field via a polarizing plate 32 and detected by an image sensor 33.

A detection signal by the image sensor 33 is in proportional to the amount of change in the polarization state of the light L4, proportional to the "modulation of birefringent index" at time to + Δt in the electro-optical crystal 29, proportional to brightness/darkness of the object image formed on the electro-optical crystal 29, and further proportional to an instantaneous value (real number) at time to + Δt of the electrical field of the transmitting pulsed light L3 (transmitting pulsed light L3 incident on the electro-optical crystal 29) from the specimen 10A. This detection signal is outputted as an imaging signal to the image processing apparatus 30.

The image processing apparatus 30 digitizes the imaging signal from the image sensor 33 of the terahertz-spectral imaging apparatus 111 and takes it in as digital data. Therefore, in the image processing apparatus 30, it is possible to know the instantaneous value (real number) at time to + Δt of the electrical field of the transmitting pulsed light L3 (transmitting pulsed light L3 incident on the electro-optical crystal 29) from the specimen 10A, according to the digital data.

Further, while adjusting the time to + Δt (Fig. 16) for making the light L4 incident on the electro-optical crystal 29 with the light delaying apparatus 18 of the terahertz-spectral imaging apparatus 111, similar digital data are continuously taken into the image processing apparatus 30. Accordingly, respective instantaneous values of the electrical field in one pulse width of the transmitting pulsed light L3 from the specimen 10A, namely, a change over time of electrical field E(t) can be measured. The change over time of electrical field E(t) of the transmitting pulsed light L3 represent a change over time of brightness/darkness of the object image formed on the electro-optical crystal 29, and are obtained for each position on the object image as an aggregate of pixel data (data group).

When the measurement of the change over time of electrical field E(t) is thus completed, the image processing apparatus 30 Fourier transforms the change over time of electrical field E(t) (namely, separates the light) for each position on the object image. As a result, a complex amplitude $E_1(\omega)$ of Equation (6) below can be obtained for each of various wavelength components constituting the transmitting pulsed light L3 at each position on the object image. In the complex amplitude $E_1(\omega)$, $|E_1(\omega)|$ represents amplitude, and $\psi_1$ represents phase. The complex amplitude $E_1(\omega)$ is a complex number.

$$E_1(\omega) = \Sigma E(t)\exp(-i\omega t) = |E_1(\omega)|\exp(i\psi_1) \ldots (6)$$

Complex amplitudes $E_1(\omega)$ of respective wavelength components at each position on the object image are also an aggregate of pixel data (data group). Among them, when a data group related to any one of wavelength components is extracted, it represents a distribution of complex amplitude of the object image of this wavelength component (image of the specimen 10A formed on the electro-optical crystal 29).

However, on the phase $\psi_1$ of the complex amplitude $E_1(\omega)$ obtained by the above Fourier transform, superimposed are not only phase information of the specimen 10A itself but also a component (hereinafter, "error component $\psi_2$") depending on a distance from each point on the specimen 10A to the conjugate point on the electro-optical crystal 29 (namely, image surface). This error component $\psi_2$ varies depending on the position of each point on the specimen 10A, and is irrelevant to the phase information of the specimen 10A itself, and thus it is necessary to be removed as follows.

To obtain the error component $\psi_2$, the change over time of electrical field E(t) similarly to the above is measured and Fourier transformed in a state that the specimen 10A is not placed. As a result, a complex amplitude $E_2(\omega)$ of each of wavelength components at each position on the electro-optical crystal 29 (namely on the image surface) can be obtained. In the complex amplitude $E_2(\omega)$, a phase $\psi_2$ corresponds to the "error component $\psi_2$".

$$E_2(\omega) = |E_2(\omega)|\exp(i\psi_2) \ldots (7)$$

Then, the error component $\psi_2$ of Equation (7) is used to correct the phase $\psi_1$ in Equation (6) according to Equation (8) below. Therefore, the error component $\psi_2$ which is irrelevant to the phase information of the specimen 10A itself and varies depending on a position of each point on the specimen 10A can be easily removed. As a result, a complex amplitude $E_3(\omega)$ of Equation (8) including only the phase information of the specimen 10A itself as the phase $[\psi_1 - \psi_2]$ can be obtained.

$$E_3(\omega) = |E_1(\omega)|\exp(i[\psi_1 - \psi_2]) \ldots (8)$$

Also the complex amplitude $E_3(\omega)$ after the correction by Equation (8) is generated for each of wavelength components at each position on the object image (image of the specimen 10A formed on the electro-optical crystal 29), thereby composing an aggregate of pixel data (data group). In the data group, a data group related to any one of wavelength components represents a pure distribution of complex amplitude of the object image of this wavelength component.

After completing generation of the complex amplitude $E_3(\omega)$ after correction, the image processing apparatus 30 uses the complex amplitude $E_3(\omega)$ after correction to perform image processing according to a procedure of a flowchart of Fig. 17, thereby generating a phase-contrast image of the specimen 10A. The image processing of Fig. 17 is performed for each data group related to each of the wavelength components.

In Step S1, a data group (namely a data group representing a distribution of complex amplitude of the object image on the image surface (electro-optical crystal 29) of the optical imaging system 27) related to the complex amplitude $E_3(\omega)$ after correction of a certain wavelength component is stored in an array A(i, j) for arithmetic operation. The "i" and "j" denote an address of each pixel data in the stored data group. Each pixel data of the data group in the array A(i, j) represents the complex amplitude $E_3(\omega)$ at each position on the object plane (electro-optical crystal 29) of the optical imaging system 27.

Next (Step S2), two-dimensional Fourier transform is performed on each pixel data of the data group in the array A(i, j). This processing corresponds to processing of converting a distribution of complex amplitude on the object plane (electro-optical crystal 29) of the optical-imaging system 27 into a distribution of complex amplitude on the pupil 27A of the optical imaging system 27. A data group generated by this processing (data group representing a distribution of complex amplitude on the pupil plane 27A) is stored in an array B(i, j). Each pixel data of the data group in the array B(i, j) represent a complex amplitude at each position on the pupil plane 27A.

Next (Step S3), among respective pixel data of the data group in the array B(i, j), pixel data in a particular area on the pupil plane 27A is multiplied by a predetermined complex number given by $F \times \exp[i\theta]$. This processing corresponds to processing of shifting the phase of complex amplitude of the pixel data in the particular area by a predetermined amount (phase $\theta$) and multiplying the amplitude by F. "F" is a number of 1 or smaller. A data group generated by this processing is stored in an array C(i, j). Each pixel data of the data group in the array C(i, j) also represents the complex amplitude at each position on the pupil plane 27A.

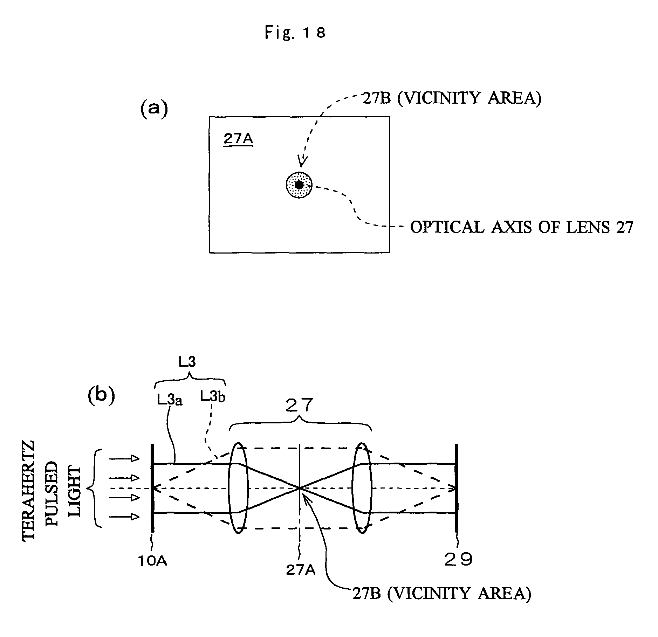

Here, the aforementioned particular area on the pupil plane 27A will be explained. In this embodiment, as shown in Fig. 18(a), a vicinity area 27B in a dot shape including an intersection point (the origin of a so-called frequency coordinate) with the optical axis of the optical imaging system 27 within the pupil plane 27A is set as the aforementioned particular area. As shown in Fig. 18(b), this vicinity area 27B corresponds to a passing position of a direct light L3a in the transmitting pulsed light L3 from the specimen 10A.

The reason why the passing position of the direct light L3a is in the vicinity of the origin of frequency coordinate is that the terahertz pulsed light lighting the specimen 10A is a parallel light (point light source), and the direction of movement of the terahertz pulsed light is in parallel to the optical axis of the optical imaging system 27. Incidentally, the passing position of a diffraction beam L3b in the transmitting pulsed light L3 spreads in a surrounding area of the vicinity area 27B of the pupil plane 27A.

In the phase-contrast microscope system 210 of this embodiment, since the phase plate is not arranged on the pupil plane 27A of the optical imaging system 27, no phase modulation occurs for both the direct light L3a and the diffraction beam L3b when the transmitting pulsed light L3 (namely the direct light L3a and the diffraction beam L3b) from the specimen 10A actually passes through the pupil plane 27A of the optical imaging system 27. Accordingly, the distribution of complex amplitude (data group in the array A(i, j)) on the image pane (electro-optical crystal 29) of the optical imaging system 27 has a low contrast.

However, by converting the aforementioned distribution of complex amplitude (data group in the array A(i, j)) by the direct light L3a and the diffraction beam L3b, which are not subjected to phase modulation, into the distribution of complex amplitude (data group in the array B(i, j)) on the pupil plane 27A, and by shifting phases of complex amplitudes of pixel data in the vicinity area 27B in this distribution of complex amplitude by a predetermined amount (phase $\theta$), phase modulation equivalent to the case of arranging the phase plate on the pupil plane 27A can be numerically given to the direct light L3a. Note that the vicinity area 27B corresponds to a phase shift area provided on the conventional phase plate.

Further, when the phase modulation of pixel data in the vicinity area 27B is performed, since the amplitude of the complex amplitude of the pixel data is multiplied by F, the amplitude of the direct light L3a can be numerically decreased by using a positive number smaller than 1 as the "F". In other words, the intensity of the direct light L3a can be reduced numerically. This processing is equivalent to allowing the phase shift area on the conventional phase plate to have absorption (reducing transmittance of the phase shift area). In general, since the intensity of the direct light L3a is stronger as compared to the diffraction beam L3b, weakening of the direct light L3a can increase the interference effect with the diffraction beam L3b.

Next (Step S4), two-dimensional inverse Fourier transform is performed on each pixel data of the data group in the array C(i, j) generated in the above-described processing of Step S3. This processing corresponds to processing of converting a distribution of complex amplitude (after phase modulation) on the pupil plane 27A again into a distribution of complex amplitude on the image surface (electro-optical crystal 29) of the optical imaging system 27. A data group generated by this processing (data group expressing a distribution of complex amplitude on the image surface) is stored in an array D(i, j). Each pixel data of the data group in the array D(i, j) represents a complex amplitude at each position on the image surface of the optical imaging system 27.

The processing in Step S4 (two-dimensional inverse Fourier transform) can numerically generate an interference of the direct light L3a which was subjected to phase conversion in the vicinity area 27B on the pupil plane 27A and the diffraction beam L3b which was not subjected to phase conversion in the surrounding area of the vicinity area 27B on the pupil plane 27A. In other words, it is possible to numerically generate the same interference effect as that in the optical member (phase plate) that is essential to a conventional phase-contrast microscope.

As a result, the distribution of complex amplitude (data group in the array D(i, j)) on the image surface (electro-optical crystal 29) of the optical imaging system 27 has a high contrast according to setting of the aforementioned phase θ and F value. Note that when the specimen 10A has a minute phase structure, the phase difference between the direct light L3a and the diffraction beam L3b can be set to zero (or 180 degrees) by setting the phase θ = $\pm\pi/2$, and thus an object image with high contrast can be obtained.

After completing the processing in Steps S3, S4, the image processing apparatus 30 proceeds to processing in Step S5, and uses each pixel data in a data group (namely the data group in the array D(i, j)) representing the above-described distribution of complex amplitude after the Fourier transform to obtain the square of the absolute value of the complex amplitude of the pixel data. A data group generated in this processing is stored in an array I(i, j). The data group in the array I(i, j) represents a distribution of intensity of an object image (namely a phase-contrast image of the specimen 10A).

As described above, in the phase-contrast microscope system 210 in this embodiment, an imaging signal from the terahertz-spectral imaging apparatus 111 is taken into the image processing apparatus 30 and is image processed according to the procedure of the flowchart of Fig. 17, and thereby the phase-contrast image of the specimen 10A can be generated in a deterministic manner. In other words, without using a dedicated optical member (phase plate) which is essential to a conventional typical phase-contrast microscope, the phase-contrast image of the specimen 10A can be generated.

Further, the phase-contrast microscope system 210 of this embodiment can observe the phase-contrast image of the specimen 10A by using the data group in the array I(i, j) obtained finally by the image processing of Fig. 17 and outputting respective pixel data thereof to the display 40. At this time, the phase-contrast image of the specimen 10A may be displayed for each of lightwave components thereof, or may be displayed after performing an arithmetic operation of the data groups of respective wavelength components with each other.

Furthermore, in the phase-contrast microscope system 210 of this embodiment, in Step S3 of Fig. 17, the dimension of the vicinity area 27B (the number of pixel data ≥ 1) corresponding to the passing position of the direct light L3a on the pupil plane 27A and the phase θ and the F value of the complex number (F $\times$ exp[iθ]) to be multiplied with complex amplitudes of pixel data in the vicinity area 27B can be set freely. Accordingly, phase-contrast images of the same object under various conditions can be obtained easily, whereby it is possible to choose an optimum observation condition for the specimen 10A to obtain a phase-contrast image at this time. It is preferable that the dimension of the vicinity area 27B (the number of pixel data ≥ 1) is set to obtain a favorable contrast considering the aberration of the optical imaging system 27.

(Modification Example)

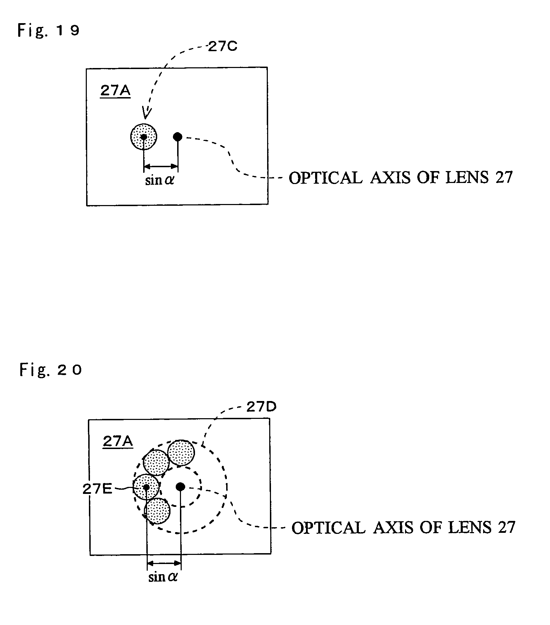

Note that in the above-described embodiment, there is explained an example in which the direction of movement of the terahertz pulsed light which lights the specimen 10A is in parallel to the optical axis of the optical imaging system 27, but the present invention is not limited to this. The direction of movement of the terahertz pulsed light relative to the optical axis of the optical imaging system 27 may be slanted. In this case, it becomes necessary to slant the angle of the semiconductor substrate 24 relative to the optical axis. The movement of direction of the terahertz pulsed light can be slanted according to an oblique angle α of the semiconductor substrate 24 so as to change an incident angle on the specimen 10A. In the case of such oblique lighting, the processing in Step S3 of Fig. 17 may be performed with the vicinity area 27C (Fig. 19) in a dot shape including a point separated from the origin of frequency coordinate by "sin $\alpha$" being a target.

Further, in the above-described embodiment, there is explained an example of generating a phase-contrast image of an object image by means of point light source, but the present invention is not limited to this. Other than this, the present invention can be applied to the case of generating a phase-contrast image of an object image by means of annular lighting. In this case, it is necessary to keep the slant angle $\alpha$ (angle relative to the optical axis) of the semiconductor substrate 24 constant, and to rotate the slant direction (incident angle of the terahertz pulsed light) of the semiconductor substrate 24 about the optical axis.

Then, in each of plural incident angles, the measurement of change over time of electrical field E(t) similarly to the above is performed, a distribution of complex amplitude (complex amplitude $E_3(\omega)$ after correction) of the object image is generated, and processing until Step S4 in Fig. 17 is performed. The processing at this time in Step S3 may be performed in order according to the incident direction of the terahertz pulsed light with each vicinity area 27E in a ring-shaped area 27D as shown in Fig. 20 being a target. The processing until Step S4 is repeated for each of the incident directions in a time division manner, and when plural distributions of complex amplitude (data group in an array D(i, j)) having different incident directions are obtained, the process proceeds to the processing in Step S5 after they are combined. As a result, a phase-contrast image of the specimen 10A by the annular lighting can be obtained.

Further, in the above-described embodiment, an example of non-scanning type is explained, in which the amount of change in polarization state of the probe beam (L4) is detected at once by the image sensor 33 of the terahertz-spectral imaging apparatus 111, but the present invention is not limited to this. The present invention can also be applied to a case (scanning type) where the terahertz pulsed light is irradiated on a local area of the specimen 10A, and the amount of change in polarization state of the probe beam (L4) is detected while relative positions of the irradiated area of the terahertz pulsed light and the specimen 10A are changed.

Furthermore, in the above-described embodiment, an example of forming an object image on the electro-optical crystal 29 based on the transmitting pulsed light L3 generated from the specimen 10A (transmission-type terahertz-spectral imaging apparatus 111) is explained, but the present invention is not limited to this. The present invention can also be applied to a case (reflective type) where the object image is formed based on a reflected pulsed light generated from the specimen.

Further, in the above-described embodiment, an example in which the specimen 10A is lighted by a terahertz pulsed light is explained, but the present invention is not limited to this. The present invention can also be applied to a case where the specimen 10A is lighted by a pulsed light in another frequency range. For example, in the case where the central wavelength band is in the visible light range, it is needed to increase the time resolution of the femtosecond pulsed laser 11 of the terahertz-spectral imaging apparatus 111, change the material of the optical imaging system 27, and use one having faster response time as the electro-optical crystal 29.

Furthermore, in the above-described embodiment, an example of the phase-contrast microscope system 210 having the terahertz-spectral imaging apparatus 111 is explained, but the present invention is not limited to this. The present invention can also be applied to a case where the terahertz-spectral imaging apparatus 111 is omitted (namely, to a phase-contrast microscope apparatus constituted of the image processing apparatus 30 and the display 40). In this case, a phase-contrast image of the specimen 10A can be generated by just inputting the data group related to the complex amplitude $E_3(\omega)$ similarly to the above (namely, the data group representing the distribution of complex amplitude of the object image), to the image processing apparatus 30.

[Embodiment for obtaining an interference image]

This embodiment is an embodiment of an interference microscope system and a microscopic observation method using this system.

First, the configuration of this system is explained.

As shown in Fig. 21, this system is provided with a terahertz-spectral imaging apparatus (reference numerals 1 1 to 20), an image processing apparatus 30, a display 40, and so forth.

The structure of this terahertz-spectral imaging apparatus is the same as the structure of the terahertz-spectral imaging apparatus shown in Fig. 11 or Fig. 15.

In the image processing apparatus 30, a program necessary for realizing this observation method (which will be described later) is installed in advance. Note that a part or the whole of processing in the control circuit 20 may be executed by the image processing apparatus 30, and a part or the whole of processing in the image processing apparatus 30 may be executed by the control circuit 20.

An image data group obtained by the terahertz-spectral imaging apparatus is taken into the image processing apparatus 30 via the control circuit 20. The image processing apparatus 30 Fourier transforms (temporal Fourier transform) a change over time of the distribution of electrical field strength shown by the image data group to obtain each of distributions of complex amplitude of respective wavelength components of a lightwave generated on the imaging surface I.

Next, the image observation method will be explained.

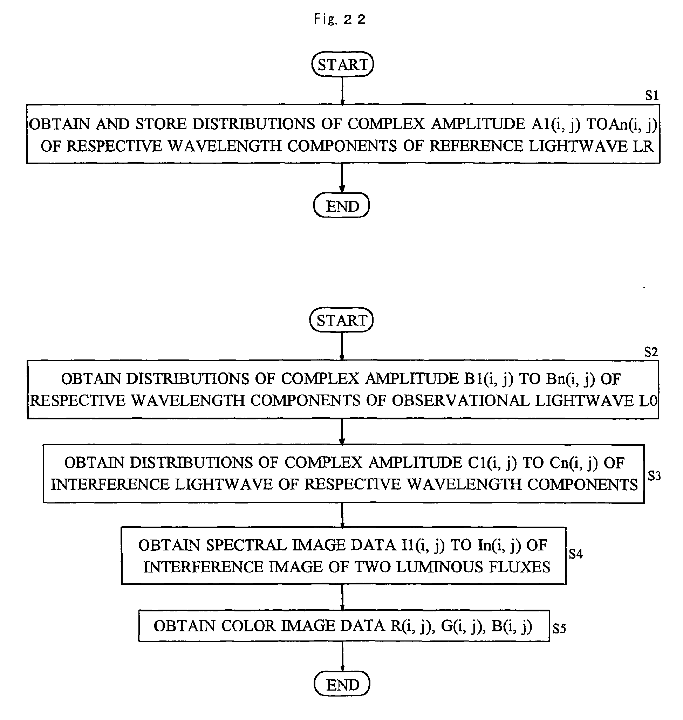

As shown in Fig. 22, this observation method is constituted of Step S1 to Step S5.

Step S1 is not needed to be executed for every time of observation of a specimen 1, and is executed, for example, by the manufacturer before shipment of this system. Step S2 and thereafter is executed for every time of observation of the specimen 1. These steps will be explained in order below.

(Step S1)

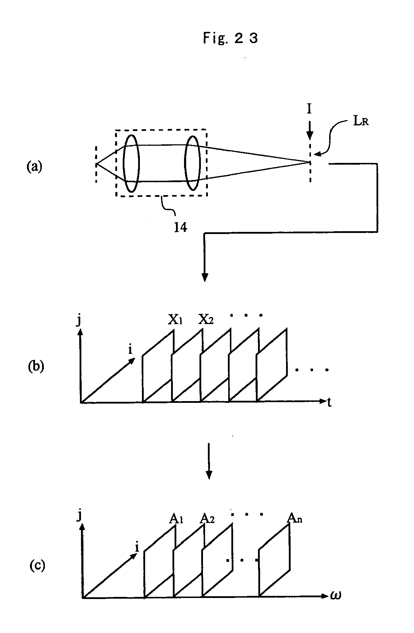

In Step S1, as shown in Fig. 23(a), the specimen 1 is removed from the optical path. In this state, the lightwave generated on the image surface I of the optical imaging system 14 is designated as a reference lightwave $L_R$.

In this state, the control circuit 20 obtains image data groups $X_1$, $X_2$, ... (Fig. 23(b)). The image processing apparatus 30 Fourier transforms (temporal Fourier transforms) changes over time of distributions of electrical field strength shown by the image data $X_1$, $X_2$, ... to obtain data of distributions of complex amplitude $A_1(i, j)$, $A_2(i, j)$ ..., $A_n(i, j)$, and stores them (Fig. 23(c)).

These data $A_1(i, j)$, $A_2(i, j)$ ..., $A_n(i, j)$ show distributions of complex amplitude of respective wavelength components of the reference lightwave $L_R$.

(Step S2)

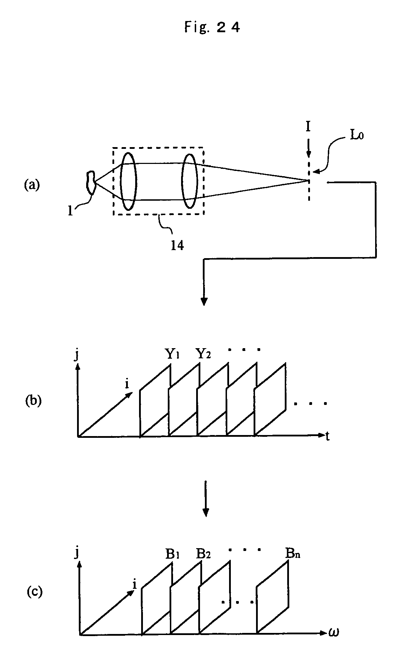

In Step S2, as shown in Fig. 24(a), the specimen 1 is arranged on the optical path. In this state, a lightwave generated on the image surface I of the optical imaging system 14 is designated as an observational lightwave $L_0$.

In this state, the control circuit 20 obtains image data groups $Y_1$, $Y_2$, ... (Fig. 24(b)).

The image processing apparatus 30 Fourier transforms (temporal Fourier transforms) changes over time of distributions of electrical field strength shown by the image data $Y_1$, $Y_2$, ... to obtain data of distributions of complex amplitude $B_1(i, j)$, $B_2(i, j)$ ..., $B_n(i, j)$ (Fig. 24(c)).

These data $B_1(i, j)$, $B_2(i, j)$ ..., $B_n(i, j)$ show distributions of complex amplitude of respective wavelength components of the observational luminous flux $L_0$.

(Step S3)

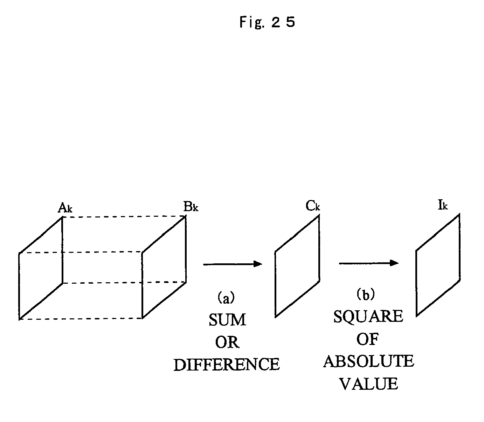

The image processing apparatus 30 takes the sum or difference of values of the same pixels in the data $A_1(i, j)$ and $B_1(i, j)$ as each other (Fig. 25(a)), and place the data constituted of the sum or difference in $C_1(i, j)$.

Similarly, the image processing apparatus 30 takes the sum or difference of values of the same pixels in each of the data $A_2(i, j)$, ..., $A_n(i, j)$ and each of the data $B_2(i, j)$, ..., $B_n(i, j)$ as each other and place the data constituted of the sum or difference in $C_2(i, j)$, ..., $C_n(i, j)$, respectively.

When turned into equation, such processing in the image processing apparatus 30 becomes Equation (9) below.

$$C_k(i, j) = A_k(i, j) \pm B_k(i, j),$$

$$(\text{where } k = 1, 2, ..., n) ... (9)$$

Thus, taking the difference or sum of values of the same pixels as each other in the data $A_k(i, j)$ and $B_k(i, j)$ means to bring the reference luminous flux $L_R$ and the observational luminous flux $L_0$ into interference arithmetically.

Therefore, the data $C_k(i, j)$ shows a distribution of complex amplitude of a virtual interference lightwave generated by the reference luminous flux $L_R$ and the observational luminous flux $L_0$. Note that the respective data $C_1(i, j)$, $C_2(i, j)$, ..., $C_n(i, j)$ show respective wavelength components of the virtual interference lightwave.

(Step S4)

The image processing apparatus 30 takes the squares of the absolute values of values of respective pixels in data $C_1(i, j)$ (Fig. 25(b)), and place the data constituted by the squares of the absolute values in $I_1(i, j)$.

Similarly, the image processing apparatus 30 takes the squares of the absolute values of values of respective pixels in the data $C_2(i, j)$, ..., $C_n(i, j)$, and place the data constituted by the squares of the absolute values in $I_2(i, j)$, ..., $I_n$ (i, j), respectively.

Thus, taking the squares of the absolute values of values of respective pixels in the data $C_i(i, j)$ means to obtain an image (interference image) of the specimen 1 by the virtual interference lightwave.

Therefore, the data $I_k(i, j)$ show the distribution of intensity of the interference image. Note that the respective data $I_1(i, j)$, $I_2(i, j)$, ..., $I_n(i, j)$ show respective wavelength components (respective spectral images) of the interference image.

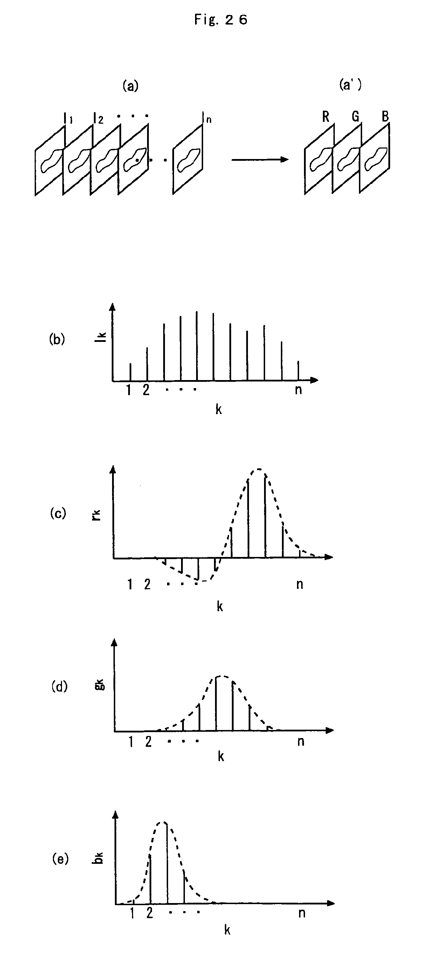

Fig. 26(a) is a view of the concept of data $I_1(i, j)$, $I_2(i, j)$, ..., $I_n(i, j)$ of these respective spectral images.

(Step S5)

The image processing apparatus 30 multiplies appropriate weighted coefficients $r_1$, $r_2$, ..., $r_n$ (Fig. 26(c)) with values of certain pixels $I_1$, $I_2$, ..., $I_n$ (Fig. 26(b)) of data $I_1(i, j)$, $I_2(i, j)$, ..., $I_n(i, j)$ of respective spectral images separately and takes the sum thereof, and selects the sum thereof as values of the same pixels of data R(i, j). This selection is performed similarly for each of the pixels to complete the data R(i, j).

Further, the image processing apparatus 30 multiplies appropriate weighted coefficients $g_1$, $g_2$, ..., $g_n$ (Fig. 26 (d)) with values of certain pixels $I_1$, $I_2$, ..., $I_n$ (Fig. 26(b)) of data $I_1(i, j)$, $I_2(i, j)$, ..., $I_n(i, j)$ of respective spectral images separately and takes the sum thereof, and selects the sum thereof as values of the same pixels of data G(i, j). This selection is performed similarly for each of the pixels to complete the data G(i, j).

Further, the image processing apparatus 30 multiplies appropriate weighted coefficients $b_1$, $b_2$, ..., $b_n$ (Fig. 26 (e)) with values of certain pixels $I_1$, $I_2$, ..., $I_n$ (Fig. 26(b)) of data $I_1(i, j)$, $I_2(i, j)$, ..., $I_n(i, j)$ of spectral images separately and takes the sum thereof, and selects the sum thereof as values of the same pixels of data B(i, j). This selection is performed similarly for each of the pixels to complete the data B(i, j).

When turned into equation, such processing in the image processing apparatus 30 becomes Equation (10) as follows.

[Equation 1]

$$
\begin{cases}
R(i, j) = \sum_{k=1}^{n} r_k I_k(i, j) \\
G(i, j) = \sum_{k=1}^{n} g_k I_k(i, j) \quad \dots (10) \\
B(i, j) = \sum_{k=1}^{n} b_k I_k(i, j)
\end{cases}
$$

Fig. 26(a') is a view of the concept of the completed data R(i, j) G(i, j), B(i, j). These data R(i, j) G(i, j), B(i, j) are data for expressing the data $I_1(i, j)$, $I_2(i, j)$, ..., $I_n(i, j)$ of the respective spectral images shown in Fig. 26(a) in one color image.

The image processing apparatus 30 transmits these data R(i, j), G(i, j), B(i, j) to the display 40. The display 40 displays an image based on these data R(i, j), G(i, j), B(i, j). On the display 40, an interference image of the specimen 1 is displayed (refer to Fig. 21).

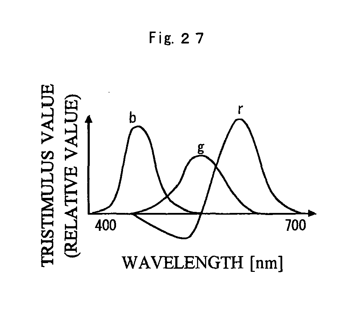

Incidentally, curves of the weighted values $r_k$, $g_k$, $b_k$ shown in Figs. 26(c), 26(d), 26(e) have the same shapes as the curves of color matching functions of general RGB system as shown in Fig. 27.

Next, effects of this observation method will be explained.

In this observation method, data $B_1(i, j)$, $B_2(i, j)$, ..., $B_n(i, j)$ of distributions of complex amplitude of the observational lightwave $L_0$ are obtained, and these data are overlapped with data $A_1(i, j)$, $A_2(i, j)$, ..., $A_n(i, j)$ of distributions of complex amplitude of the reference lightwave $L_R$ to take the squares of the absolute values thereof.

By this operation, data $I_1(i, j)$, $I_2(i, j)$, ..., $I_n,(i, j)$ of respective spectral images of an interference image made by the observational lightwave $L_0$ and the reference lightwave $L_R$ are obtained.

Therefore, in this system, it becomes possible to observe an interference image of a specimen 1 even though the interference is not actually generated.

Further, in this observation method, since data $I_1(i, j)$, $I_2(i, j)$, ..., $I_n,(i, j)$ of spectral images are converted into data R(i, j), G(i, j), B(i, j) for expressing in one color image, the interference image on the display 40 is expressed by a distribution of colors in which a distribution of elements in the specimen 1 can be seen by eyes.

Note that this observation method uses the terahertz-spectral imaging apparatus, so that one shown by the data $I_1(i, j)$, $I_2(i, j)$, ..., $I_n(i, j)$ of spectral images is an interference image in the terahertz frequency range. However, since this observation method uses the weighted coefficients $r_k$, $g_k$, $b_k$ drawing the same curves as the curves of color matching functions (refer to Fig. 27) when the data $I_1(i, j)$, $I_2(i, j)$, ..., $I_n(i, j)$ of spectral images are converted into data $R(i, j)$, $G(i, j)$, $B(i, j)$, an interference image on the display 40 is expressed in color with similar tendency to an interference image generated by a conventional interference microscope (namely, an interference image in the visible light range).

Note that in this observation method, although Step S1 is executed before the shipping of this system, it may be executed after the shipping. For example, it may be executed every time a specimen 1 is observed, or every time measurement conditions in or environment for this system changes.

When the data $A_1(i, j)$, $A_2(i, j)$, ..., $A_n(i, j)$ of the reference lightwave $L_R$ are thus updated frequently, the state of the system when actually measuring the data $A_1(i, j)$, $A_2(i, j)$, ..., $A_n(i, j)$ of the reference lightwave $L_R$ and the state of the system when actually measuring the data $B_1(i, j)$, $B_2(i, j)$, ..., $B_n(i, j)$ of the observational lightwave $L_0$ become close to each other, so that calculation errors in an interference image (calculation errors in data $I_1(i, j)$, $I_2(i, j)$, ..., $I_n(i, j)$ of spectral images) can be suppressed to be low. Therefore, the observation accuracy increases.

Further, in this observation method, the data of the reference lightwave $L_R$ are actually measured (refer to Step S1), but they may be calculated by simulation (based on optical design data of this system). However, the observation accuracy increases more by performing the actual measurement.

Further, in this observation method, only one type of interference image is obtained for the same specimen 1, but two or more types of interference images for the same specimen 1 may be obtained by arithmetically changing interference conditions (such as intensity ratio between the reference lightwave and the observational lightwave). By arithmetic operation, two or more types of interference images with different interference conditions from each other can be easily obtained. It is also easy to obtain a large number of interference images.

Further, since only interference conditions can be changed by arithmetic operation, it is possible to observe the state of the same specimen 1 at the same timing as each other under two or more types of interference conditions. This is impossible in principle by an interference microscope which actually generates an interference.

Further, this observation method employs the terahertz-spectral imaging apparatus using light in the terahertz frequency range as the illumination for the microscope apparatus, but may employ a similar spectral imaging apparatus using light in a range outside the terahertz spectral range as the illumination.

Further, in this system, a non-scanning microscope apparatus which obtains image data of the distribution of electrical field strength of the image surface I at once is applied, but a scanning microscope apparatus which obtains image data of the distribution of electrical field strength is obtained one by one may also be used.

[Other embodiments]

It is possible to realize one system incorporating functions of any two or more systems in the above-described respective embodiments. One example is a system incorporating both the function to obtain a super-resolution image and the function to obtain a differential interference image. Incidentally, when incorporating the function to obtain a super-resolution image, the structure of the terahertz-spectral imaging apparatus may be the structure shown in Fig. 1 (having the stage to change the posture of the semiconductor substrate), while when not incorporating the function to obtain a super-resolution image, the structure of the terahertz-spectral imaging apparatus may be the structure shown in Fig. 11, Fig. 15, Fig. 21 (in which the stage to change the posture of the semiconductor substrate is omitted).

**Claims**

1. A microscopic observation method using a microscope apparatus which has an optical imaging system and is capable of measuring a distribution of complex amplitude of a lightwave generated on an image surface of the optical imaging system which images a luminous flux radiated from a lighted object, the method comprising:

a measuring step of changing a lighting angle for said object and measuring distributions of complex amplitude of respective lightwaves which are generated separately on said image surface by respective luminous fluxes radiated from said object at respective lighting angles;
a calculating step of calculating a distribution of complex amplitude of a virtual lightwave based on data of the distributions of complex amplitude of said respective lightwaves, the virtual lightwave being generated on an image surface of the optical virtual-imaging system when said optical imaging system is replaced by an optical virtual-imaging system having a larger numerical aperture; and

an imaging step of generating image data of a virtual image of said object formed by said optical virtual-imaging system on the image surface thereof based on the distribution of complex amplitude of said virtual lightwave.

2. The microscopic observation method according to claim 1, wherein said calculating step comprises:

spatially Fourier transforming the distributions of complex amplitude of said respective lightwaves to calculate distributions of complex amplitude of respective lightwaves which are generated separately on a pupil of said optical imaging system by said respective luminous fluxes;
laterally staggering and combining the calculated distributions of complex amplitude of said respective lightwaves to calculate a distribution of complex amplitude of a virtual lightwave generated on a pupil of said optical virtual-imaging system; and
spatially inverse Fourier transforming the distribution of complex amplitude of said virtual lightwave to calculate a distribution of complex amplitude of a virtual lightwave generated on the image surface of said optical virtual-imaging system.

3. The microscopic observation method according to claim 2, wherein
said calculating step corrects a phase offset and/or an amplitude offset due to dispersion between respective lightwaves from the calculated distributions of complex amplitude of said respective lightwaves upon the combining.

4. The microscopic observation method according to any one of claim 1 to claim 3, wherein
said calculating step uses data with a phase component corrected as the data of the distributions of complex amplitude of said respective lightwaves, the phase component being superimposed in common on each of said respective lightwaves by a single body of said optical imaging system.

5. The microscopic observation method according to any one of claim 1 to claim 4, wherein said microscope apparatus comprises:

a lighting unit which lights said object by a pulsed light;
said optical imaging system which images a luminous flux radiated from said object;
a detecting unit which detects a distribution of electrical field strength of a lightwave generated on the image surface of said optical imaging system; and
a control unit which controls emission timing for said pulsed light and timing for the detecting, to detect a change over time in said distribution of strength in one emission period, and calculates a distribution of complex amplitude of a lightwave generated on said image surface based on data of the change over time.

6. The microscopic observation method according to claim 5, wherein
said pulsed light is a pulsed light in a terahertz frequency range.

7. A microscope apparatus, comprising:

a lighting unit which lights an object by a pulsed light;
the optical imaging system which images a luminous flux radiated from said object;
a detecting unit which detects a distribution of electrical field strength of a lightwave generated on an image surface of said optical imaging system;
a control unit which controls emission timing for said pulsed light and timing for the detecting, to detect a change over time in said distribution of strength in one emission period, and calculates a distribution of complex amplitude of a lightwave generated on said image surface based on data of the change over time; and
a changing unit which changes a lighting angle for said object, wherein
said control unit measures distributions of complex amplitude of respective lightwaves which are generated separately on said image surface by respective luminous fluxes radiated from said object at respective lighting angles.

8. The microscope apparatus according to claim 7, wherein
said pulsed light is a pulsed light in a terahertz frequency range.

9. The microscope apparatus according to claim 7 or claim 8, wherein
said control unit executes:

a calculating step of calculating a distribution of complex amplitude of a virtual lightwave based on data of the distributions of complex amplitude of said respective lightwaves, the virtual lightwave being generated on an image surface of the optical virtual-imaging system when said optical imaging system is replaced by an optical virtual-imaging system having a larger numerical aperture; and

an imaging step of generating image data of a virtual image of said object formed by said optical virtual-imaging system on the image surface thereof based on the distribution of complex amplitude of said virtual lightwave.

10. The microscope apparatus according to claim 9, wherein
in said calculating step, said control unit
spatially transforms the distributions of complex amplitude of said respective lightwaves to calculate distributions of complex amplitude of respective lightwaves which are generated separately on a pupil of said optical imaging system by said respective luminous fluxes;
laterally staggers and combines the distributions of complex amplitude of said respective lightwaves to calculate a distribution of complex amplitude of a virtual lightwave generated on the pupil of said optical virtual-imaging system; and
spatially inverse Fourier transforms the distribution of complex amplitude of said virtual lightwave to calculate a distribution of complex amplitude of a virtual lightwave generated on the image surface of said optical virtual-imaging system.

11. The microscope apparatus according to claim 10, wherein
in said calculating step, upon the combining said control unit corrects a phase offset and/or an amplitude offset due to dispersion between respective lightwaves from the distributions of complex amplitude of said respective lightwaves.

12. The microscope apparatus according to any one of claim 9 to claim 11, wherein
in said calculating step, said control unit uses data with a phase component corrected as the data of the distributions of complex amplitude of said respective lightwaves, the phase component being superimposed in common on each of said respective lightwaves by a single body of said optical imaging system.

13. An image processing apparatus to be applied to the microscope apparatus according to claim 7 or claim 8, the image processing apparatus comprising:

a calculating unit which calculates a distribution of complex amplitude of a virtual lightwave based on data of the distributions of complex amplitude of said respective lightwaves, the virtual lightwave being generated on an image surface of the optical virtual-imaging system when said optical imaging system is replaced by an optical virtual-imaging system having a larger numerical aperture; and

an imaging unit which generates image data of a virtual image of said object based on the distribution of complex amplitude of said virtual lightwave, the object being formed by said optical virtual-imaging system on the image surface thereof.

14. The image processing apparatus according to claim 13, wherein
said calculating unit
spatially Fourier transforms the distributions of complex amplitude of said respective lightwaves to calculate distributions of complex amplitude of respective lightwaves which are generated separately on a pupil of said optical imaging system by said respective luminous fluxes;
laterally staggers and combines the distributions of complex amplitude of said respective lightwaves to calculate a distribution of complex amplitude of a virtual lightwave generated on the pupil of said optical virtual-imaging system; and
spatially inverse Fourier transforms the distribution of complex amplitude of said virtual lightwave to calculate a distribution of complex amplitude of a virtual lightwave generated on the image surface of said optical virtual-imaging system.

15. The image processing apparatus according to claim 14, wherein
upon the combining, said calculating unit corrects a phase offset and/or an amplitude offset due to dispersion between respective lightwaves from the distributions of complex amplitude of said respective lightwaves.

16. The image processing apparatus according to any one of claim 13 to claim 15, wherein
said calculating unit uses data with a phase component corrected as the data of the distributions of complex amplitude of said respective lightwaves, the phase component being superimposed in common on each of said respective lightwaves by a single body of said optical imaging system.

17. An image processing apparatus, comprising:

a first processing unit which shifts phases of complex amplitudes of respective pixel data of a first data group by a predetermined amount to generate a second data group, the first data group representing a distribution of complex amplitude of an object image;

a second processing unit which obtains a difference or a sum of complex amplitudes of pixel data whose images are at relative positions with a shift by a predetermined amount in a predetermined direction, to thereby generate a third data group from respective pixel data of said first data group and of said second data group; and

a third processing unit which generates a fourth data group from respective pixel data of said third data group by obtaining squares of absolute values of complex amplitudes of the pixel data.

18. A differential interference microscope apparatus, comprising:

an image processing apparatus according to claim 17; and

a display unit which displays respective pixel data of said fourth data group.

19. The differential interference microscope apparatus according to claim 18, further comprising:

a lighting unit which lights an object by a pulsed light;

an optical imaging system which forms an image of said object based on a pulsed light generated from said object when lighted by said lighting unit;

a measuring unit which measures a change over time in electrical field of a pulsed light incident on an image surface of said optical imaging system; and

a generation unit which Fourier transforms the change over time of electrical field to generate said first data group for each wavelength component.

20. The differential interference microscope apparatus according to claim 19, wherein said lighting unit lights said object by a pulsed light in a terahertz frequency range.

21. An image processing method, comprising:

a first processing step of shifting phases of complex amplitudes of respective pixel data of a first data group by a predetermined amount, to generate a second data group, the first data group representing a distribution of complex amplitude of an object image;

a second processing step of obtaining a difference or a sum of complex amplitudes of pixel data whose images are at relative positions with a shift by a predetermined amount in a predetermined direction, to thereby generate a third data group from respective pixel data of said first data group and of said second data group; and

a third processing step of generating a fourth data group from respective pixel data of said third data group by obtaining squares of absolute values of complex amplitudes of the pixel data.

22. An image processing apparatus, comprising:

a first processing unit which performs Fourier transform on respective pixel data of a first data group based on a direct light and a diffraction beam from an object, to generate a second data group, the first data group representing a distribution of complex amplitude of an object image formed on an image surface of an optical imaging system, the second data group representing a distribution of complex amplitude on a pupil plane of said optical imaging system;

a second processing unit which shifting phases of complex amplitudes of certain pixel data of respective pixel data of said second data group by a predetermined amount to generate a third data group, the certain pixel data corresponding to a passing position of said direct light on said pupil plane;

a third processing unit which performs inverse Fourier transform on respective pixel data of said third data group, to generate a fourth data group representing a distribution of complex amplitude on said image surface; and

a fourth processing unit which generates a fifth data group from respective pixel data of said fourth data group by obtaining squares of absolute values of complex amplitudes of the pixel data.

**23.** The image processing apparatus according to claim 22, wherein
while shifting, by the predetermined amount, phases of complex amplitudes of pixel data corresponding to a passing position of said direct light, said second processing unit reduces amplitudes of the complex amplitudes to generate said third data group.

**24.** A phase-contrast microscope apparatus, comprising:

an image processing apparatus according to claim 22 or claim 23; and
a display unit which displays respective pixel data of said fifth data group.

**25.** The phase-contrast microscope apparatus according to claim 24, further comprising:

a lighting unit which lights said object by a pulsed light;
an optical imaging system which forms an image of said object based on the direct light in pulsed form and the diffraction beam generated from said object when lighted by said lighting unit;
a measuring unit which measures a change over time in electrical field of a pulsed light incident on an image surface of said optical imaging system; and
a generation unit which Fourier transforms the change over time in electrical field to generate said first data group for each wavelength component.

**26.** The phase-contrast microscope apparatus according to claim 25, wherein
said lighting unit lights said object by a pulsed light in a terahertz frequency range.

**27.** An image processing method, comprising:

a first processing step of performing Fourier transform on respective pixel data of a first data group based on a direct light and a diffraction beam from an object, to generate a second data group, the first data group representing a distribution of complex amplitude of an object image formed on an image surface of an optical imaging system, the second data group representing a distribution of complex amplitude on a pupil plane of said optical imaging system;
a second processing step of shifting phases of complex amplitudes of certain pixel data of respective pixel data of said second data group by a predetermined amount, to generate a third data group, the certain pixel data corresponding to a passing position of said direct light on said pupil plane;
a third processing step of performing inverse Fourier transform on respective pixel data of said third data group to generate a fourth data group representing a distribution of complex amplitude on said image surface; and
a fourth processing step of generating a fifth data group from respective pixel data of said fourth data group by obtaining squares of absolute values of complex amplitudes of the pixel data.

**28.** A microscopic observation method using a microscope apparatus which has an optical imaging system and is capable of measuring a distribution of complex amplitude of an observational lightwave generated on an image surface of the optical imaging system which images an observational luminous flux radiated from a lighted object, the method comprising:

an observational data obtaining step of obtaining data of a distribution of complex amplitude of said observational lightwave;
a reference data obtaining step of obtaining data of a distribution of complex amplitude of a reference lightwave generated on said image surface when said object is removed from an optical path; and
an imaging step of overlapping the data of the distribution of complex amplitude of said observational lightwave with the data of the distribution of complex amplitude of said reference lightwave at same coordinates and squaring absolute values thereof to generate image data of an interference image of said object.

**29.** The microscopic observation method according to claim 28, wherein said microscope apparatus comprises:

a lighting unit which lights said object by a pulsed light;
said optical imaging system which images an observational luminous flux radiated from said object;
a detecting unit which detects a distribution of electrical field strength of an observational lightwave generated on the image surface of said optical imaging system; and
a control unit which controls emission timing for said pulsed light and timing for the detecting, to detect a change over time of said distribution of strength in one emission period, and calculates a distribution of complex amplitude of said observational lightwave based on data of the change over time.

30. The microscopic observation method according to claim 29, wherein
said pulsed light is a pulsed light in a terahertz frequency range.

31. The microscopic observation method according to any one of claim 28 to claim 30, wherein:

said observational data obtaining step obtains data of distributions of complex amplitude of respective wavelength components of said observational lightwave;
said reference data obtaining step obtains data of distributions of complex amplitude of respective wavelength components of said reference lightwave; and
said imaging step generates spectral image data of said interference image by the overlapping and the squaring of absolute values for each wavelength component.

32. The microscopic observation method according to claim 31, wherein
said imaging step converts said spectral image data into data for expressing said interference image in one color image.

33. An interference microscope apparatus, comprising:

a lighting unit which lights an object by a pulsed light;
an optical imaging system which images an observational luminous flux radiated from said object;
a detecting unit which detects a distribution of electrical field strength of an observational lightwave generated on an image surface of said optical imaging system; and
a control unit which controls emission timing for said pulsed light and timing for the detecting, to detect a change over time of said distribution of strength in one emission period, and calculates a distribution of complex amplitude of said observational lightwave based on data of the change over time, wherein
said control unit obtains data of a distribution of complex amplitude of said observational lightwave and data of a distribution of complex amplitude of a reference lightwave generated on said image surface when said object is removed from an optical path; and overlaps the data of the distribution of complex amplitude of said observational lightwave with the data of the distribution of complex amplitude of said reference lightwave at same coordinates and squares absolute values thereof to generate image data of an interference image of said object.

34. The interference microscope apparatus according to claim 33, wherein
said pulsed light is a pulsed light in a terahertz frequency range.

35. The interference microscope apparatus according to claim 33 or claim 34, wherein
said control unit obtains data of distributions of complex amplitude of respective wavelength components of said reference lightwave and data of distributions of complex amplitude of respective wavelength components of said observational lightwave, and generates spectral image data of said interference image by performing the overlapping and the squaring of absolute values for each wavelength component.

36. The interference microscope apparatus according to claim 35, wherein
said control unit converts said spectral image data into data for expressing said interference image in one color image.

37. An image processing apparatus to be applied to a microscope apparatus which has an optical imaging system and is capable of measuring a distribution of complex amplitude of an observational lightwave generated on an image surface of the optical imaging system which images an observational luminous flux radiated from a lighted object, the apparatus comprising:

an observational data obtaining unit which obtains data of a distribution of complex amplitude of said observational lightwave;
a reference data obtaining unit which obtains data of a distribution of complex amplitude of a reference lightwave generated on said image surface when said object is removed from an optical path; and
an imaging unit which overlaps the data of the distribution of complex amplitude of said observational lightwave with the data of the distribution of complex amplitude of said reference lightwave at same coordinates and squares absolute values thereof to generate image data of an interference image of said object.

**38.** The image processing apparatus according to claim 37, wherein said microscope apparatus comprises:

a lighting unit which lights said object by a pulsed light;
an optical imaging system which images an observational luminous flux radiated from said object;
a detecting unit which detects a distribution of electrical field strength of an observational lightwave generated on the image surface of said optical imaging system; and
a control unit which controls emission timing for said pulsed light and timing for the detecting, to detect a change over time of said distribution of strength in one emission period, and calculates a distribution of complex amplitude of said observational lightwave based on data of the change over time.

**39.** The image processing apparatus according to claim 38, wherein
said pulsed light is a pulsed light in a terahertz frequency range.

**40.** The image processing apparatus according to any one of claim 37 to claim 39, wherein
said observational data obtaining unit obtains data of distributions of complex amplitude of respective wavelength components of said observational lightwave;
said reference data obtaining unit obtains data of distributions of complex amplitude of respective wavelength components of said reference lightwave; and
said imaging unit generates spectral image data of said interference image by performing the overlapping and the squaring of absolute values for each wavelength component.

**41.** The image processing apparatus according to claim 40, wherein
said imaging unit converts said spectral image data into data for expressing said interference image in one color image.

Fig. 1

Fig. 2

$$\boxed{\text{START}}$$

| |
|---|
| CHANGE LIGHTING ANGLE θ AND OBTAIN DISTRIBUTIONS OF COMPLEX AMPLITUDE A0(i, j) TO A8(i, j) ON IMAGE SURFACE I |

S1

| |
|---|
| FOURIER TRANSFORM DISTRIBUTIONS OF COMPLEX AMPLITUDE A0(i, j) TO A8(i, j) TO OBTAIN DISTRIBUTIONS OF COMPLEX AMPLITUDE B0(i, j) TO B8(i, j) ON PUPIL P |

S2

| |
|---|
| LATERALLY STAGGER AND COMBINE DISTRIBUTIONS OF COMPLEX AMPLITUDE B0(i, j) TO B8(i, j) TO RESTORE DISTRIBUTION OF COMPLEX AMPLITUDE C(i, j) ON PUPIL P′ OF OPTICAL VIRTUAL-IMAGING SYSTEM 14′ |

S3

| |
|---|
| FOURIER TRANSFORM DISTRIBUTION OF COMPLEX AMPLITUDE C(i, j) TO CALCULATE DISTRIBUTION OF COMPLEX AMPLITUDE D(i, j) ON IMAGE SURFACE I′ OF OPTICAL VIRTUAL-IMAGING SYSTEM 14′ |

S4

| |
|---|
| CALCULATE DISTRIBUTION OF STRENGTH E(i, j) ON IMAGE SURFACE I′ BASED ON DISTRIBUTION OF COMPLEX AMPLITUDE D(i, j) |

S5

$$\boxed{\text{END}}$$

EP 1 767 923 A2

Fig. 3

Fig. 4

$\theta = \theta_1$

(a)

$\theta = \theta_2$

(b)

## Fig. 5

(a)

$\theta = \theta_0$

X
Z

TO OPTICAL
IMAGING
SYSTEM 14

1

Y
P
L0
X

(a)

$\theta = \theta_1$

X
Z

TO OPTICAL
IMAGING
SYSTEM 14

1

Y
P
L1
X

(c)

$\theta = \theta_2$

X
Z

TO OPTICAL
IMAGING
SYSTEM 14

1

Y
P
L2
X

Fig. 6

Fig. 7

Fig. 8

(a)

LATERALLY STAGGER DATA
BY sinθ 1 ONLY

(b)

Fig. 9

(a)

LATERALLY STAGGER DATA
BY $\sin\theta$ 2 ONLY

(b)

Fig. 1 0

Fig. 11

EP 1 767 923 A2

IMAGE PROCESSING
APPARATUS

DISPLAY

Fig. 1 2

LIGHT L4

ELECTRICAL FIELD OF
TRANSMITTING PULSED LIGHT L3

E (t)

t o

t o + △ t

TIME

Fig. 1 3

START

S1 | A(i, j)=DATA GROUP REPRESENTING DUSTRUBUTION OF COMPLEX AMPLITUDE OF OBJECT IMAGE

S2 | B(i,j) = A(i,j)

S3 | C(i,j) = exp[i θ ] × B(i,j)

S4 | D(i,j) = A(i,j) − C(i + △ i,j + △ j)

S5 | I(i,j) = D*(i,j) × D(i,j)

END

Fig.14

(a) A(i,j)

(b) C(i,j)

Fig.15

EP 1 767 923 A2

Fig. 1 6

Fig. 1 7

Fig. 1 8

(a)

27B (VICINITY AREA)

27A

OPTICAL AXIS OF LENS 27

(b)

L3

L3a  L3b

27

TERAHERTZ PULSED LIGHT

10A

27A

27B (VICINITY AREA)

29

Fig. 1 9

27C

27A

sin α

OPTICAL AXIS OF LENS 27

Fig. 2 0

27D

27A

27E

sin α

OPTICAL AXIS OF LENS 27

EP 1 767 923 A2

Fig. 2 1

Fig. 2 2

(START)

↓

OBTAIN AND STORE DISTRIBUTIONS OF COMPLEX AMPLITUDE A1(i, j) TOAn(i, j) OF RESPECTIVE WAVELENGTH COMPONENTS OF REFERENCE LIGHTWAVE LR | S1

↓

(END)

(START)

↓

OBTAIN DISTRIBUTIONS OF COMPLEX AMPLITUDE B1(i, j) TO Bn(i, j) OF RESPECTIVE WAVELENGTH COMPONENTS OF OBSERVATIONAL LIGHTWAVE L0 | S2

↓

OBTAIN DISTRIBUTIONS OF COMPLEX AMPLITUDE C1(i, j) TO Cn(i, j) OF INTERFERENCE LIGHTWAVE OF RESPECTIVE WAVELENGTH COMPONENTS | S3

↓

OBTAIN SPECTRAL IMAGE DATA I1(i, j) TO In(i, j) OF INTERFERENCE IMAGE OF TWO LUMINOUS FLUXES | S4

↓

OBTAIN COLOR IMAGE DATA R(i, j), G(i, j), B(i, j) | S5

↓

(END)

Fig. 2 3

(a)

14

I

L_R

(b)

j

i

X_1  X_2  · · ·

t

(c)

j

i

A_1  A_2  · · ·  A_n

ω

Fig. 24

Fig. 2 5

Fig. 2 6

Fig. 2 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003295104 A
- JP 2002005828 A
- JP 2002098634 A

**Non-patent literature cited in the description**

- **HIROSHI KOMATSU.** Kougaku kenbikyou no kiso to ouyou. *Oyo Buturi,* 1991, vol. 60 (8), 816-817
- **HIROSHI KOMATSU.** Kougaku kenbikyou no kiso to ouyou. *Oyo Buturi,* 1991, vol. 60 (9), 924-928
- **HIROSHI KOMATSU.** Kougaku kenbikyou no kiso to ouyou. *Oyo Buturi,* 1991, vol. 60 (19), 1032-1034
- **HIROSHI KOMATSU.** Kougaku kenbikyou no kiso to ouyou. *Oyo Buturi,* 1991, vol. 60 (11), 1136-1138
- **HIROSHI KOMATSU.** Kougaku kenbikyou no kiso to ouyou. *Oyo Buturi,* 1991, vol. 60 (11), 1139-1140